(19) Europäisches Patentamt
European Patent Office
Office européen des brevets

(11) Publication number: **0 342 060 B1**

(12) # EUROPEAN PATENT SPECIFICATION

(45) Date of publication of patent specification: **17.08.94**

(51) Int. Cl.5: **G03G 21/00**, G03G 15/01

(21) Application number: **89304857.9**

(22) Date of filing: **12.05.89**

(54) **Image processing apparatus.**

(30) Priority: **13.05.88 JP 114801/88**
**13.05.88 JP 114802/88**
**30.05.88 JP 130336/88**
**17.06.88 JP 148225/88**
**17.06.88 JP 148226/88**

(43) Date of publication of application:
**15.11.89 Bulletin 89/46**

(45) Publication of the grant of the patent:
**17.08.94 Bulletin 94/33**

(84) Designated Contracting States:
**DE ES FR GB IT NL**

(56) References cited:
**EP-A- 0 303 474**
**GB-A- 2 155 860**
**US-A- 4 325 981**
**US-A- 4 586 811**
**US-A- 4 723 149**
**US-A- 4 728 984**
**US-A- 4 739 377**

**PATENT ABSTRACTS OF JAPAN, vol. 4, no. 181 (E-37)(663), 13 December 1980; & JP-A-55 123 270**

(73) Proprietor: **CANON KABUSHIKI KAISHA**
**30-2, 3-chome, Shimomaruko,**
**Ohta-ku**
**Tokyo (JP)**

(72) Inventor: **Hasuo, Kamon**
**157-1-13-43, Kariyado**
**Nakahara-ku**
**Kawasaki-shi Kanagawa-ken (JP)**
Inventor: **Masuda, Ryuichi**
**21-13, Minato-cho 1-chome**
**Funabashi-shi Chiba-ken (JP)**
Inventor: **Sato, Yuichi**
**2-49, Mitsusawa Higashi-cho**
**Kanagawa-ku**
**Yokohama-shi Kanagawa-ken (JP)**
Inventor: **Outa, Ken-Ichi**
**1-19-301, Hiyoshi 6-chome**
**Kohoku-ku**
**Yokohama-shi Kanagawa-ken (JP)**

(74) Representative: **Beresford, Keith Denis Lewis et al**
**BERESFORD & Co.**
**2-5 Warwick Court**
**High Holborn**
**London WC1R 5DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### BACKGROUND OF THE INVENTION

#### Field of the Invention

The present invention relates to an image processing apparatus and more particularly to an image processing apparatus which is suitable for use in a color copying apparatus that is capable of effecting the color copying of an image of an original.

#### Related Background Art

Conventionally, an image processing apparatus is adapted to read an image of an original placed on an original table or the like and effect a faithful recording (copying) operation, as instructed by the operator.

The progress in copying technology in recent years, coupled with the color-image recording technology, has made it possible to output a copy image which is very close to an image of an original.

Accordingly, with a conventional apparatus, if money or a certificate such as a negotiable instrument the copying of which is prohibited is placed on the original table and copying is effected by misusing the apparatus or by way of a "prank" or the like, copying is effected as instructed by the operator. Accordingly, there is the possibility of readily including an act of forgery, thereby presenting a major social problem.

In US Patent No. 4,723,149 there is disclosed an image forming apparatus for checking the copying of secret documents and includes a function for selecting an image forming area. A magnetic sensor passes over magnetic tape provided on the document and effects switching to prevent a copy being produced or to erase parts of a document by transmitting light to specified portions.

A method of preventing colour accurate reproduction of a coloured pattern is known from US Patent No. 4,325,981 in which use is made of specially prepared photographic material having a spectral reflection outside a specified wavelength range so that part or whole of a reproduction of the original is in a colour not perceivable by a direct human viewer.

These known methods of preventing copying exhibit the disadvantage that they depend upon the special physical characteristic of the original to be copied.

An object of the present invention is to provide an image processing apparatus which is capable of preventing in advance an act of forgery of money, a negotiable instrument, or the like, thereby overcoming the above-described problem of the conventional art.

According to the present invention there is provided an image processing apparatus comprising supplying means for supplying electrical image data representing an original to be processed, processing means for processing the electrical image data supplied by said supplying means, and image outputting means controlled by said processing means, characterised by determining means including storage means in which is pre-stored in electrical data form an image or spectral color range of the subject matter of at least one specified original, for determining, using the electrical image data from the supplying means whether or not the image or spectral color range represented by that data is derived from a specified original and controlling means for controlling a process function within the apparatus in dependence upon the determination result of said determining means.

Further according to the invention there is provided an image processing method comprising the steps of supplying electrical image data representing an original, processing the electrical image data supplied in said supplying step, and outputting a processed image; characterised by determining, using the electrical image data supplied in said supplying step and an image or spectral color range of the subject matter of at least one specified original stored in a memory in electrical data form, whether or not the image or spectral color range represented by the supplied image data is derived from a specified original, and controlling a process function of said method in dependence upon the determination result of said determining step.

Still further according to the invention there is provided an image processing method comprising steps of supplying electrical image data representing an original, processing the electrical image data supplied in said supplying step and outputting a reproduction image; characterised by determining using the electrical image data supplied in said supplying step and an image or spectral color range of the subject matter of at least one specified original stored in a memory in electrical data form, whether or not the original or spectral color range represented by the supplied image data is derived from a specified original, and controlling a process function of said method in dependence upon the determination result of said determining step.

If the original to be copied is a bank note or a negotiable instrument, detection is carried out to that effect and either image processing is controlled or the copy destroyed.

Another object of the present invention is to provide an image processing apparatus which effects suitable processing not only when an image utterly identical with a predetermined image but also an image similar to the specified image are input, thereby preventing forgery.

To this end in an example of the invention, there may be provided an image processing apparatus comprising input means for inputting information of an image in electrical data form; evaluating means for evaluating on the basis of said electrical data and a specified standard to what extent an input image is similar to a predetermined image; and conversion processing means for providing predetermined conversion processing of the input electrical image data in correspondence with the evaluation of the evaluating means. For instance, if an image of a certificate such as a bill or a stock the copying of which is prohibited is to be formed, the image which is formed changes in correspondence with the degree of the likelihood of being such an instrument.

Still another object of the present invention is to provide an image processing apparatus which is capable of improving the accuracy of a determination as to whether or not an input image is a predetermined image, and of minimizing the frequency at which faults occur due to mistaken determinations.

The above and other objects, features and advantages of the present invention will become more apparent from the following detailed description of the invention when read in conjunction with the accompanying drawings in which:

Fig. 1 is a block diagram of a copying apparatus in accordance with a first embodiment of the present invention;

Fig. 2 is a schematic side elevational view illustrating an example of the arrangement of image reading means shown in Fig. 1;

Fig. 3 is a schematic side elevational view illustrating an example of the arrangement of image outputting means;

Fig. 4 is a flowchart illustrating an example of a control procedure in accordance with the first embodiment;

Fig. 5 is a schematic diagram of an essential part of means for prohibiting a copying output in accordance with a second embodiment;

Fig. 6 is a flowchart illustrating an example of a control procedure in accordance with a third embodiment of the present invention;

Fig. 7 is a diagram of an image processing apparatus in accordance with a fourth embodiment of the present invention;

Fig. 8 is a block diagram illustrating an example of the arrangement of a control unit provided in a reader unit thereof;

Figs. 9A to 9C are timing charts illustrating the operation of the control unit;

Fig. 10 is a block diagram illustrating an example of the arrangement of a bill-stock recognizing circuit;

Fig. 11 is a flowchart illustrating an example of an image change processing procedure on the basis of the result of recognition.

Fig. 12 is a block diagram illustrating the arrangement of a bill-stock recognizing circuit in accordance with a fifth embodiment;

Fig. 13 is a diagram illustrating the form of image change on the basis of the arrangement shown in Fig. 12;

Fig. 14 is a block diagram illustrating an example of the arrangement of a bill-stock recognizing circuit in accordance with a sixth embodiment;

Fig. 15 is a diagram illustrating the form of image change on the basis of the arrangement shown in Fig. 14;

Fig. 16 is a flowchart illustrating an example of an image change processing procedure on the basis of the result of recognition in accordance with a seventh embodiment;

Fig. 17 is a block diagram illustrating an example of the arrangement of a bill-stock recognizing circuit in accordance with an eighth embodiment;

Fig. 18 is a diagram illustrating the form of image change on the basis of the result of recognition in accordance with a seventh embodiment;

Fig. 19 is a block diagram illustrating the arrangement of a bill stock recognizing circuit in accordance with a ninth embodiment;

Fig. 20 is a diagram illustrating the form of image change on the basis of the arrangement shown in Fig. 19;

Fig. 21 is a diagram illustrating an image processing apparatus in accordance with a tenth embodiment of the invention;

Fig. 22 is a block diagram illustrating an example of the arrangement of a video conversion circuit shown in Fig. 21;

Fig. 23 is a block diagram illustrating another example of the arrangement of the video conversion circuit shown in Fig. 21.

Fig. 24 is a diagram illustrating an image processing apparatus in accordance with an eleventh embodiment of the invention;

Fig. 25 is a block diagram illustrating an example of the arrangement of the video conversion circuit shown in Fig. 24;

Fig. 26 is a block diagram illustrating a circuit configuration in accordance with a twelfth embodiment;

Fig. 27 is a block diagram illustrating the configuration of a recognition circuit shown in Fig. 26; and

Fig. 28 is a top plan view illustrating a state at the time of reading and scanning an input original.

## DESCRIPTION OF THE PREFERRED EMBODIMENTS

Referring now to the accompanying drawings, a detailed description will be given of the preferred embodiments of the present invention.

Fig. 1 illustrates a first embodiment of an image processing apparatus in accordance with the present invention.

In Fig. 1, the image processing apparatus comprises the following component parts: a central arithmetic processing unit 1 in the form of a microcomputer; a ROM 2 in which an operation program and the like for the CPU 1, which will be described later with reference to Fig. 4, are stored; a RAM 3 used for registration or the like in a process of control by the CPU 1; a keyboard 4 having a known group of input keys, such as a key for commanding copy start and a key for setting the number of copies to be made; a keyboard interface circuit 5 for connecting the keyboard 4 to a system bus 10; image reading means 6 for reading an image depicted on a set original; an image memory 7 for storing image data which has been read; and image outputting means 8 for outputting the stored image data; bill detecting means 9 for detecting whether or not image data of a certificate the copying of which is prohibited, such as money (hereinafter referred to as a bill) or an negotiable instrument (hereinafter referred to a stock), is present in the image memory; and an image data bus 11 for transmitting the image data between the respective parts 6 - 9 at high speed.

Fig. 2 illustrates an example of the arrangement of the image reading means. In this drawing, an original illuminating lamp 61 is adapted to illuminate the surface of the original, a zoom lens 62 is adapted to form an image of the original on a CCD serving as a reading element, a CCD 63 is adapted to convert an image into an electrical signal, and a original table 64 is composed of a transparent plate. Reference numerals 65, 66, and 67 denote mirrors.

In Fig. 2, the original illuminating lamp 61 and the mirror 65 scan an original 69 placed on the original table 64 with a surface thereof to be read facing downward. The light reflected from the surface of the original is introduced into the zoom lens 62 via the group of mirrors, an image is then formed on the CCD 63 so as to be converted into an electrical signal.

Fig. 3 illustrates an example of the arrangement of the image output means 8.

In Fig. 3, reference characters 81Y, 81M, 81C, and 81K respectively denote a primary charger for yellow, a primary charger for magenta, a primary charger for cyan, and a primary charger for black. It should be noted that the accompanying letters Y, M, C, and K hereinafter similarly indicate that the components having denoted by these characters are for yellow, magenta, cyan, and black, respectively.

An LED array 82 is turned on and off in response to image data, and a developing device 83 is adapted to attach a developer (toner or the like) of a corresponding color. Numeral 84 denotes a transfer charger; 85, a cleaner; 86, a photosensitive drum.

A pickup roller 87 is adapted to pick up a recording medium (hereinafter referred to as copy paper) 810 accommodated in a paper feeding cassette 811 by separating sheets of the copy paper one by one. Pairs of conveyor rollers 812 - 815 are provided in a passage for conveying the copy paper. A conveyor belt 816 is adapted to discharge recorded copy paper; fixing rollers 88 are provided in the vicinity of a discharge outlet; and a discharged paper tray 89 is used to stack discharged copy paper thereon.

Fig. 4 illustrates an example of a control procedure in accordance with this embodiment, and the operation of the above-described arrangement will be described with reference to this drawing.

First, if a power switch (not shown) is turned on, the CPU 1 executes a predetermined initializing routine (Step S1), and is set on standby for receiving a command from the keyboard 4 after the temperature of the fixing rollers 88 reaches a predetermined level (Step S3).

When the operator instructs a copying operation by using the keyboard 1, the CPU 1 drives the image reading means 6 to read out an image of the original (Step S5). The reading of this image is effected four times by changing over a color filter, and is developed in the image memory 7 for each color (yellow, magenta, cyan and black).

Subsequently, the bill detecting means 9 is operated, and a determination is made as to whether or not the image data on the image memory 7 is that of a bill or a stock (Step S7). In this embodiment, for instance, if the address of a readable area of the original table 64 corresponds to that of a storage area on the image memory 7, the determination can be effected by recognizing the size of the original on the basis of the size of a data development area on the image memory 7 and by comparing its result with the sizes of bills and the like stored in advance in the ROM 2 and the like. In addition, this determination can also be effected by comparing the distribution of color spectra of the original with data registered in advance.

In the size of the original corresponds to the size of a bill or the like, the bill detecting means 9 outputs "1", and, if not, it outputs "0". If this output is "0", the CPU 1 outputs the image on the image memory 7 as a color image by means of the image output means 8 (Step S11). On the other hand, if the output is "1", the CPU 1 prohibits the outputting of an image (Step S13).

In the image outputting processing (Step S11), image formation is carried out on the basis of a known electrostatic process. In other words, after the photosensitive drum 86 is charged with the primary charger 81, the LED array 82 is turned on and off in correspondence with the image data in synchronism with the rotation of the photosensitive drum 86, thereby forming an electrostatic latent image. This electrostatic latent image is developed by the developing device 83 by means of a developer (toner or the like) and is transferred by the transfer charger 84 onto the copy paper 810 fed by the pickup roller 87. The output of a color image is realized by effecting the abovedescribed process for each color of yellow, magenta, cyan and black. Upon completion of development of specified colors, the copy paper 810 is conveyed to the fixing rollers 88 by means of the conveyor belt 816 so as to effect thermal fixing and is then discharged onto the discharged paper tray 89.

On the other hand, in the processing in Step S13, the CPU 1 does not start the image output means 8, so that copying is prohibited and an output is not delivered. In other words, if the original is a bill or the like, the outputting of an image is prohibited. In addition, an arrangement may be provided such that display of a predetermined error message or an alarm using speech is carried out in connection with this processing.

In order to ensure that the outputting of an image of the bill or the like is thus ultimately prohibited, in addition to prohibiting the operation of the image output means 8 as described above, the prohibition may be carried out before then. For instance, the scanning of the surface of the original is conducted four times, i.e., for each color, if the feature of the original, such as the size of the original, becomes clear in that process, the subsequent reading may be prohibited at that point of time, thereby prohibiting the outputting of an image.

In addition, an arrangement may be alternatively provided such that the outputting is prohibited after the copying operation by the image outputting means 8.

As described above in detail, in accordance with this embodiment, if a determination is made that the image is a specified one, the outputting of the image is prohibited, so that it is possible to prevent the forgery of a bill or the like.

Fig. 5 illustrates a second embodiment of the present invention for prohibiting the outputting after a copying operation. In this embodiment, the copy paper on which image formation is carried out once is not delivered to the outside, and is internally disposed of by cutting or the like.

Fig. 5 schematically illustrates an arrangement of an essential part of this embodiment. In this embodiment, regardless of the type of original, the process proceeds to the transfer of image onto the copy paper shown in Fig. 4. Then, if the output of the image detecting means 9 is "0", the conveyor belt 816 is set in the position indicated by the solid line in Fig. 5, and the copy paper 810 is conveyed by the conveyor belt 816 to the fixing rollers 88 where and the copy paper 810 is subjected to thermal fixing and then discharged onto the discharged paper tray 89. Meanwhile, if the output of the image detecting means 9 is "1", i.e., if the original was a bill or the like, the conveyor belt 816 is set in the position indicated by the broken line in Fig. 5. Then, the copy paper 810 which has been fed passes through a guide 100 and is conveyed to a cutter 101 where it is disposed of by being cut into fine pieces, making it impossible to obtain an output of copying.

Accordingly, in accordance with this embodiment, before a reproduced image for forging is delivered outside the apparatus, the copy paper is disposed of, thereby making it possible to prevent the forging of a bill or the like.

In the foregoing embodiments, as a means of controlling the output of copying, the operation of the image output means 8 is prohibited, or the discharge thereof is prohibited. However, an arrangement may be provided such that the operation of the image output means 8 itself is controlled in such a manner that the copy of a bill or the like will be unusable.

Fig. 6 illustrates an example of a control procedure in accordance with a third embodiment of the present invention for making a copy of a bill or the like unusable.

In this embodiment, processing by means of Steps S23 and S25 are provided instead of Step S13 in Fig. 4.

In other words, if the bill detecting means 9 detects a bill, a stock or the like and outputs "1", the CPU 1 calculates a logical sum of images of yellow, magenta and cyan and an image of black, and consequently moves the images of yellow, magenta and cyan to that of black (Step S23). Then, the CPU 1 outputs an image by the image output means 8 as a monochromatic image (Step S25).

Thus, by outputting a monochromatic image, it becomes impossible for the operator who attempts to engage in a forging act to engage in the act by simply using a copying apparatus.

Although, in this embodiment, it is assumed that copying in black is effected as an output of a monochromatic image, it is also possible to effect monochromatic copying in yellow, magenta or cyan. More specifically, control of the image output means 8 in any form is possible insofar as it is ensured that at least a faithful full-color copy is not produced from the standpoint of making an act of forgery difficult. In addition, if, when a bill or the like is detected before completion of the reading scanning described above, copying is effected with the contents stored in the memory 7 up until then, full-color copying will not be effected, so that this procedure is equally effective.

Although, in the foregoing embodiments, detection as to whether or not the original being copied is a bill or the like is conducted on the basis of a document size, it goes without saying that such detection may be effected by using any form of means.

For instance, means used in automatic vending machines and the like for reading a magnetic pattern of a part or the whole of a bill may be provided so as to compare that pattern with a pattern stored in advance. In this case, it is possible to provide an arrangement in which a magnetic head is provided in the original cover provided on the original table 64 for covering the original 69. Alternatively, in the case of a copying apparatus having an automatic delivery feeder (ADF) for originals, it is possible to adopt an arrangement in which a magnetic head is provided in its conveying passage.

In addition, it is also possible to adopt an arrangement in which a part or the whole of the image pattern of a bill or the like is read, and the read pattern is compared with a pattern which has been stored in advance. As for this reading, in the case of an apparatus having the configuration of a digital copier such as the one described above, the reading operation of the image reading means 6 may be used as it is. In the case of the other types of apparatus, the reading head may be provided on the original cover or conveying passage of an ADF or the like. Alternatively, the illumination means may be provided on the original cover, and a comparison may be effected by reading a watermark pattern.

Furthermore, it goes without saying that the present invention can be applied irrespective of the form of the image output means 8. For instance, although an arrangement is adopted in which an LED array is used in the above-described embodiments so as to form an electrostatic latent image on the photosensitive drum, an arrangement may be alternatively adopted in which a laser beam or the like is used. Furthermore, the means of forming an electrostatic latent image on the photosensitive drum is not confined such an electrophotographic type, but various other types may be used.

As described above, in accordance with the third embodiment of the present invention, if an attempt is made to copy an object the copying of which is prohibited, such as a bill or a stock, detection is carried out to that effect, and an output of copying is controlled, making it possible to effect a desired faithful copying. Thus, there is an advantage in that the act of forgery can be prevented in advance.

Particularly in this embodiment, if the color original is output by being converted into a monochrome, it is possible to ascertain what the original image was like. In other words, when the stock is copied not for the purpose of forgery but, for instance, as a document, a copy can be provided.

Fig. 7 illustrates an example of a schematic internal structure of a digital color image processing system in accordance with a fourth embodiment of the invention. As illustrated in the drawing, this system comprises a digital color image reading unit (hereinafter referred to as a color reader) 401 provided in an upper portion thereof, and a digital color image printing unit (hereinafter referred to as a color printer) provided in a lower portion thereof. This color reader 401 is adapted to read the color image information of an original for each color by means of color separating means, which will be described later, and a photoelectric conversion element such as a CCD, and to convert the same into electrical digital image signals. Meanwhile, the color printer 402 is a laser beam color printer for effecting recording by reproducing a color image for each color in response to those digital image signals and by transferring them onto the recording medium a plurality of times in the form of digital dots.

First, an outline of the color reader 401 will be described. An original is designated at 403, and platen glass 404 is for placing the original thereon. A rod lens array 405 is adapted to condense a reflected image from the original subjected to exposure scanning and to input the image into an equal magnification-type full color sensor 406, components 405, 406, 407 and 410 effecting exposure scanning in the direction of the arrow A1 integrally as an original scanning unit 411. Color-separated image signals read for each line during the exposure scanning are amplified to a predetermined voltage by a sensor output signal amplifying circuit 407, and is then input to a video processing unit 412, which will be described later, by means of a signal line 501 so as to be subjected to signal processing. A detailed description of this arrangement will be given later. It should be noted that the signal line 501 is made into a coaxial cable so as to ensure faithful transmission of signals.

A signal line 502 is for supplying a drive pulse for driving the equal magnification-type full color sensor 406, and all the necessary drive pulses are generated in the video processing unit 412. A white plate 408 and a black plate 409 are used for correcting the white level of video signals and for correcting the black level thereof. If the white plate 408 and the black plate 409 are illuminated with a halogen exposure lamp 410, signal levels of the predetermined densities are respectively obtained and can be used for correcting the white level and the black level of the video signals.

A control unit 413 incorporating a microcomputer carries out all of the following control of the color reader 401: display at an operating panel 420 via a bus 508; control of key input, control of the video processing unit, and control of a bill stock-feature extracting circuit; detection by position sensors S1, S2 of the position of the original scanning unit 411 via signal lines 509, 510; control via a signal line 503 of a stepping motor drive circuit 415 for effecting the pulse driving of a stepping motor 414 for moving the scanning unit 411; the ON/OFF control of the halogen exposure lamp 410 by an exposure lamp driver 421 via a signal line 504; control of the amount of light; and control of a digitizer 416 via a signal line 505, an internal key, and a display unit, etc.

A color image signal read by the aforementioned exposure scanning unit 411 during the exposure scanning of the original is input to the video processing unit 412 from the amplification circuit 407 via the signal line 501. The color image signal is then provided with various types of processing to be described later inside the video processing unit 412, and is transmitted to the color printer 402 via an interface circuit 456.

A description will now be given of an outline of the color printer 402. A scanner is designated at 711 and has a laser output portion for converting a video signal from the color reader 401 into an optical signal, a polygon mirror 712 of a polyhedron (e.g., octahedron), a motor for rotating this mirror 712, an f/$\theta$ lens (image-forming lens) 713, etc. A reflection mirror 714 is adapted to change the optical path of a laser beam, and a photosensitive drum is designated at 715. A laser beam made emergent from a laser output portion is reflected by the polygon mirror 712, is transmitted through the lens 713 and the mirror 714, and is made to linearly scan (luster scan) the surface of the photosensitive drum 715, thereby forming a latent image corresponding to the image of the original.

In addition, reference numeral 717 denotes a primary charger; 718, a whole image exposure lamp; 723, a cleaner section for recovering residual toner which was not transferred; and 724, a pre-transfer charger, all of these components being provided around the photosensitive drum 715.

A developing unit 726 is adapted to develop an electrostatic latent image formed on the surface of the photosensitive drum 715 by the laser exposure. Development sleeves 731Y, 731M, 731C, 731Bk directly effect development in contact with the photosensitive drum 715. Toner hoppers 730Y, 730M, 730C, 730Bk are designed to retain reserve toner. Screws 732 are adapted to transfer the developer. These sleeves 731Y - 731Bk, toner hoppers 730Y - 730Bk, and screws 732 constitute the developing unit 726, and these components are disposed around a rotary shaft P of the developing unit 726. When, for instance, a toner image of yellow is formed, the yellow toner development is carried out at the position shown in the drawing. At the time of forming a toner image of magenta, the developing unit 726 is rotated with the shaft P as a center, and the development sleeve 731M within a magenta developing unit is disposed at the position at which it is brought into contact with the photosensitive drum 715. The development in cyan and black is also effected in a similar manner.

In addition, a transfer drum 716 is designed to transfer a toner image formed on the photosensitive drum 715 onto the copy paper. An actuator plate 719 is adapted to detect the moving position of the transfer drum 716. A home position sensor 720 is adapted to detect the movement of the transfer drum 716 to a home position as the transfer drum 716 is brought into proximity with this actuator plate 719. Reference numeral 725 denotes a transfer drum cleaner; 728, a de-electrificator; and 729, a transfer charger. These members 719, 720, 725, 729 are disposed around the transfer roller 716.

Meanwhile, paper feeding cassettes 735, 736 are used for accommodating copy paper serving as a recording medium. Paper feeding rollers 737, 738 are adapted to feed copy paper from the cassettes 735, 736. Timing rollers 739, 740, 741 are adapted to time the paper feeding and conveyance. The paper fed and conveyed via these components is introduced into a paper guide 749, is wound around the transfer drum 716 with its tip held by a gripper, and is then moved to an image forming process.

Furthermore, a drum rotating motor 550 is adapted to synchronously rotate the photosensitive drum 715 and the transfer drum 716. A releasing claw 750 is adapted to remove the paper from the transfer drum 716 after completion of the image forming process. A conveyor belt 742 is adapted to convey the removed paper. An image fixing unit 743 fixes the paper which has been conveyed by the conveyor belt 742 and has a pair of heat pressure rollers 744, 745.

Moreover, a printer controller is adapted to control the various parts of the printer 402 and has a PWM circuit 778 for effecting pulse width modulation of the image information transferred from the reader 401 and then supplying the same to the scanner 711.

Referring now to Fig. 8, a detailed description will be given of the control unit 413 of the reader 401 in accordance with the present invention.

(Control Unit)

The control unit 413 comprises a CPU 422 in the form of a microcomputer and organically effects control of video signal processing, as well as control of the lamp driver 421 for exposure and scanning, the stepping motor driver 415, the digitizer 416, and the operating panel 420 via the signal lines 508 (bus), 504, 503, 505, etc., respectively, in correspondence of the contents stored in a program ROM 423, a RAM 424, and a RAM 425. Incidentally, as for the RAM 425, it is assumed that non-volatility is assured by a battery 431. A signal line 505 is for serial communication which is generally used, and the operator inputs necessary data on the basis of a protocol between the CPU 422 and the digitizer 416. Namely, the signal line 505 is one for inputting data for editing the original, such as coordinates at the time of movement, synthesis, and the like, designation of an area, designation of a copy mode, designation of a magnification, etc. The signal line 503 is one whereby the CPU 422 gives commands on the scanning speed, distance, forward movement, backward movement, etc., to the motor driver 415. Upon receipt of a command from the CPU 422, the motor driver 415 outputs predetermined pulses to the stepping motor 414, thereby rotating the motor 414. Serial interfaces (I/Fs) 429, 430 are generally used ones which are realized by LSIs for serial I/s such as 8251 by Intel Corporation. The digitizer 416 and the motor driver 415 are provided with similar circuits (not shown).

In addition, sensors S1, S2 are used to detect the position of the original exposure scanning unit (designated at 411 in Fig. 7), S1 representing the home position in which the white level correction of image signals is effected. The sensor S2 detects the fact that the original exposure scanning unit is located at the tip of the image, and this position serves as a reference position of the original.

(Printer Interface)

Signals ITOP, BD, VCLK, VIDEO, HSYNC, SRCOM (511 - 516) are respectively interface signals between the color printer 402 and the reader 401 shown in Fig. 7. All the video signals VIDEO 514 read by the reader 401 are transmitted to the color printer 402 on the basis of the aforementioned signals. ITOP 511 is a synchronous signal in the image feeding direction (hereinafter referred to as the subscanning direction). This synchronous signal is produced once for each transmission of the four colors (yellow, magenta, cyan, and black), i.e., a total of four times on each such occasion. This signal is made synchronous with the rotation of the transfer drum 716 and the photosensitive drum 715 so as to be aligned with the image at the tip of the original when the toner image is transferred onto the copy paper wound around the transfer drum 716 of the color printer 402, at a point of contact with the photosensitive drum 715. This signal 511 is transmitted to the video processing unit disposed in the reader 401 and is output as an interruption of the CPU 422 in the controller 413.

The CPU 422 controls images in the subscanning direction for editing or the like by using ITOP interruption as a reference. BD 512 is a synchronous signal in the luster scanning direction (hereinafter referred to as the main scanning direction) which is produced once during one rotation of the polygon mirror 712, i.e., once during one luster scanning. The image signals read by the reader 401 are transmitted to the printer 402 by one line at a time in the main scanning direction in synchronism with the signal BD 512. VCLK 513 is a synchronous clock for transmitting the digital VIDEO signal 514 of 8 bits to the color printer 402, and allows the VIDEO signal 514 to be sent via flip-flops 332, 335, as shown in Fig. 9B.

HSYNC 515 is a synchronous signal in the main scanning direction which is produced in synchronism with VCLK 513, and has the same period as the signal BD 512. Strictly speaking, the VIDEO signal 514 is transmitted in synchronism with HSYNC 515. This arrangement is adopted because, since the signal BD 512, which is produced in synchronism with the rotation of the polygon mirror 712, contains in large amounts the jitter of the motor for rotating the polygon mirror 712, if the VIDEO signal 514 is synchronized with the BD signal as it is, jitter would take place in the image, so that HSYNC 515 is required which is produced in synchronism with jitter-free VCLK on the basis of the BD signal.

SRCOM is a signal line for semi-double bilateral serial communication. As shown in Fig. 9C, a command CM is transmitted in synchronism with an 8-bit serial clock SCLK during the transmission of a synchronous signal CBUSY (command busy) sent from the reader. In response, a status signal ST is returned in synchronism with an 8-bit serial clock occurring during the transmission of SBUSY (status busy) sent from the printer. All the exchanges of information including commands from the reader to the printer, such as the color mode and the selection of a cassette, information on the status of the printer, such as jamming, paper shortage, wait, etc., are conducted via this communication line SRCOM.

Fig. 9A shows a timing chart for transmitting one four-color (full-color) image on the basis of ITOP and HSYNC. ITOP 511 is produced once during one rotation or two rotations of the transfer drum 716. At a timing ①, data of a yellow image is transmitted from the reader 401 to the printer 402. Similarly, data of a magenta image is transmitted at a timing ②, that of a cyan image at a timing ③, and that of a black image at a timing ④. Thus, a full-color image is formed on the copy paper with four colors superposed thereon. If, for instance, the image density in the feeding direction is assumed to be 16 pel/mm with respect to 420 mm in the longitudinal direction of an A3-size image HSYNC is transmitted $420 \times 16 = 6{,}720$ times. At the same time, this signal is output to a clock input for a timer circuit 428 provided in the controller circuit 413, and is adapted to supply an interruption HINT 517 to the CPU 422 after the lapse of a predetermined count. Thus, the CPU 422 effects image control in the feeding direction, such as withdrawal and movement.

(Bill-stock-feature Extracting Circuit)

Referring now to Fig. 10, a description will be given of the operation of a bill-stock-feature extracting circuit 452.

Fig. 10 is a block diagram illustrating an example of the configuration of the video processing unit 412 including the bill-stock-feature extracting circuit 452. The color image signal read by the exposure scanning unit 411 shown in Fig. 7 is input from an amplification circuit 407 to the video processing unit 412 via the signal line 501. In this video processing unit 412, that input is received by a video receiver circuit 460, and the misregistration of each color and shading are corrected by a video preprocessing circuit 461 so as to output r, g, b signals.

The preprocessed video signal is input to the bill-stock-feature extracting circuit 452, and after being converted from a luminance signal into a density signal by a LOG conversion circuit 462, the signal is subjected to masking and under-color removal (UCR) by a masking/UCR circuit 463. Then, the signal is transmitted to the color printer 402 via the following: an italic image/mirror image processing circuit 464, a color balance circuit 465, a color conversion circuit 466, a magnification conversion circuit 467, a texture processing circuit 468, an edge emphasis smoothing circuit 469, a video signal synthesization circuit 470, and a video driver circuit 471, and then via a signal line VIDEO 8.

Each processing circuit provided in the video processing unit 412 is connected to each other via an internal bus VUBUS and is further connected to the CPU 422 via a CPU bus transceiver 472 and a signal line 508.

In the bill-stock feature extracting circuit 452, on the basis of the r, g, b signals that are input into it, a determination is made as to whether or not the input data matches with the features of a predetermined bill or stock, and a determining result thereof is returned to the CPU 422 via the VUBUS.

On the basis of a determining result with respect to a number of features, the CPU 422 makes a final determination as to whether or not the original being examined is a bill or stock. If the answer is YES, the CPU 422 sets a conversion parameter for a specific processing circuit via the VUBUS, the parameter being such that it will not allow a faithful image of the original to be reproduced.

As for the processing of a determination on the matching effected by the bill-stock-feature extracting circuit 452, the determination may be made with respect to the input signals r, g, and b by making a comparison with data on the distribution of color spectra of the original registered in advance in a ROM or the like, or by comparing a pattern of a part or the whole of the image of the original with pattern data registered in advance, or effecting such processings in combination. In addition to the extraction of features with respect to the contents of the image data that has been read, it is possible to provide other appropriate processing such as addition of a circuit or the like for determining the size, magnetic pattern, watermark pattern or the like of the original and to transmit such data to the CPU 422.

Fig. 11 shows an example of parameter changing processing which is carried out by the CPU 422 on the basis of a determination on a number of features obtained from the above-described feature extracting circuit 452. This procedure can be stored in the ROM 423.

First, in Step S101, various results of determination are input from the aforementioned circuit 452 and others. Then, a final determination is made on the basis of the input results as to whether or not the original being examined is a bill or a stock. In accordance with that calculated result, a changing parameter is set in the processing circuit 463 and the like in Step S105.

A description will now be given of examples of implementing the details of parameter changing.

The following formulae (a) to (d) are examples of changing the color when a determination is made that the original being examined is a bill or a stock, and this processing is carried out by changing the parameters of masking and UCR with respect to the masking/UCR processing circuit 463.

$$\begin{pmatrix} Y' \\ M' \\ C' \\ Bk' \end{pmatrix} = \begin{pmatrix} m_{11} & m_{12} & m_{13} \\ m_{21} & m_{22} & m_{23} \\ m_{31} & m_{32} & m_{33} \\ m_{41} & m_{42} & m_{43} \end{pmatrix} \begin{pmatrix} Y \\ M \\ C \end{pmatrix} \quad (a)$$

$$\begin{pmatrix} Y' \\ M' \\ C' \\ Bk' \end{pmatrix} = \begin{pmatrix} m_{21} & m_{22} & m_{23} \\ m_{31} & m_{32} & m_{33} \\ m_{41} & m_{42} & m_{43} \\ m_{11} & m_{12} & m_{13} \end{pmatrix} \begin{pmatrix} Y \\ M \\ C \end{pmatrix} \quad (b)$$

$$\begin{pmatrix} Y' \\ M' \\ C' \\ Bk' \end{pmatrix} = \begin{pmatrix} 0 & 0 & 0 \\ 0.2 & 0.4 & 0.4 \\ 0 & 0 & 0 \\ 0 & 0 & 0 \end{pmatrix} \begin{pmatrix} Y \\ M \\ C \end{pmatrix} \quad (c)$$

$$\begin{pmatrix} Y' \\ M' \\ C' \\ Bk' \end{pmatrix} = \begin{pmatrix} 0 & 0 & 0 \\ 0 & 0 & 0 \\ 0 & 0 & 0 \\ 0.3 & 0.5 & 0.2 \end{pmatrix} \begin{pmatrix} Y \\ M \\ C \end{pmatrix} \quad (d)$$

Formula (a) is an example of usual masking, whereas, if a matrix $[m_{ij}]$ is changed into that shown in formula (b), the color changes totally from that of the original, so that the recorded image cannot be used as a circulatable one as a bill or a stock. However, the contents of the stock can be recorded.

In addition, formula (c) is an example in which the image is printed in a specified color, while formula (d) is an example in which the image is printed in a monochrome.

As described above, in accordance with this embodiment, even in the case where it is determined that the original is a bill or a stock, it is possible to produce a copy although it is not faithful to the original, but sufficient enough to ascertain the contents described therein. Thus, it is possible to preserve the contents of the stock as a record.

Fig. 12 illustrates a fifth embodiment of the present invention. In the drawing, reference numeral 450-2 denotes a bill-stock determining circuit, and in this example a CPU is provided so as to effect control in correspondence with the determination of a bill or the like.

A signal 480 is adapted to control a color which is output to the masking/UCR processing circuit. The other functions are identical as those shown in Fig. 10.

In the case where a usual copying operation is carried out, as shown at (a) in Fig. 13, the masking/UCR processing circuit 463 is controlled in such a manner that VIDEO 8 is changed over in the order of yellow, magenta, cyan, and black in synchronism with the ITOP signal output from the printer 402. When it is determined in the bill-stock determining circuit 450-2 that the original is a bill or a stock, the color of the printed image is changed by changing the order of the sequence of the colors, as shown at (b) in Fig. 13.

Thus, since the masking/UCR processing circuit is controlled directly from the bill-stock determining circuit 450-2, it is possible to effect processing for changing the color independently of the CPU 422, so that the program of the CPU 422 does not become complicated, and, even if the program of the CPU 422 is altered, the prevention of forgery can be effected more positively.

Fig. 14 illustrates a sixth embodiment of the present invention.

In the drawing, a bus changeover signal 481 is adapted to control a bus transceiver 472 for the CPU bus 508, and a bill-stock determining circuit 450-3 operates independently of the CPU 422, constantly monitoring the video signals r, g, b. If a determination is made that the original is a bill or a stock, the CPU bus transceiver 472 is closed to exclusively use the VUBUS, and if, for instance, a parameter is written in the italic image/mirror image processing circuit 464, it is possible to print an italic image, as shown at (a) in Fig. 15 or a mirror image as shown at (b) in Fig. 15.

If such a conversion is carried out forcedly, a printed image which can be distinguished clearly from an authentic one is output, thereby making it possible to prevent forgery.

Figs. 15 (c) - (e) are other examples in which mirror images are output by controlling the italic image/mirror image processing circuit 464, in which (c) is an example in which an output is delivered in reduced form by controlling the magnification processing circuit 467, (d) is an example in which an output is delivered by through lateral longitudinal independent magnification by controlling the magnification processing circuit 467, and (e) is an example in which an output is delivered by adding on the characters "copy" by controlling the video signal synthesization circuit 470 and a character-pattern generator 473.

In addition, the color balance may be changed substantially by controlling the color balance processing circuit 465. Alternatively, an image may be output in a specific color (monochrome) by controlling the color conversion circuit 466, or a monotone image may be output by controlling the color conversion circuit 466. Furthermore, an image may be output in the form of mosaic texture by controlling the texture processing circuit, or fine lines may be deleted through filtering or blurring processing may be effected by controlling the edge emphasis smoothing processing circuit 469. Moreover, an image may be output by being subjected to negative-positive conversion by controlling the LOG conversion circuit 462.

Since the arrangement is provided such that processing for forgery prevention is carried out in the video processing unit 412, it is possible to assure the forgery prevention more positively.

Fig. 16 is a diagram illustrating a seventh embodiment of the present invention.

In this embodiment, in the feature extracting circuit 452, the CPU 422 calculates the degree of the "likelihood of being a bill or a stock", and sets a conversion parameter for a specific processing circuit in correspondence with the degree of the "likelihood of being a bill or a stock".

Since the processing of a matching determination carried out by the feature extracting circuit 452 is identical with that shown in Fig. 7, a description thereof will be omitted.

Specifically, Fig. 16 illustrates an example of a parameter conversion processing procedure carried out by the CPU 422 on the basis of a number of evaluations obtained from the above-described feature extracting circuit 452. This procedure can be stored in the ROM 423.

First, in Step S111, various evaluations (determining results) are input from the aforementioned circuit 452 and others. Then, in Step S113, an appropriate calculation is performed on the basis of the evaluations, and a determination is made on the degree of the "likelihood of being a bill or a stock". In Step S115, conversion parameters are determined in correspondence with that calculated result, and are set in the processing circuit 463 or the like. Incidentally, the aforementioned degree and conversion parameters can be formatted in advance as tables in the ROM 423.

A description will now be given of an example of the contents of parameters to be converted.

The following formulae (e) and (f) are examples in which the color is changed in correspondence with the degree of the likelihood of being a bill or a stock, and this processing is effected by changing masking/UCR parameters for the masking/UCR processing circuit 463.

$$\begin{bmatrix} Y \\ M \\ C \\ B \end{bmatrix} = \begin{bmatrix} m_{11} & m_{12} & m_{13} \\ m_{21} & m_{22} & m_{23} \\ m_{31} & m_{32} & m_{33} \\ m_{41} & m_{42} & m_{43} \end{bmatrix} \begin{bmatrix} Y \\ M \\ C \end{bmatrix} \quad (e)$$

$$\begin{bmatrix} Y' \\ M' \\ C' \\ Bk' \end{bmatrix} = \begin{bmatrix} (m_{11} - \alpha), & (m_{12} + \alpha), & m_{13} \\ m_{21}, & (m_{22} - \alpha), & (m_{23} + \alpha) \\ (m_{31} + \alpha), & m_{32}, & (m_{33} - \alpha) \\ m_{41}, & m_{42}, & m_{43} \end{bmatrix} \begin{bmatrix} Y \\ M \\ C \end{bmatrix} \quad (f)$$

Formula (e) is an example of usual masking, and if matrix $[m_{ij}]$ is changed into that shown in formula (f), the color is output by being converted in correspondence of the value of $\alpha$ which is determined by the degree of the likelihood of a bill or a stock. Consequently, when $\alpha$ is large, the reproduced color changes totally from that of the original, so that the reproduced copy cannot be used as a circulatable one as a bill or a stock. However, the contents (number or the like) given in the stock can be preserved as a record. Meanwhile, with respect to an original image whose degree of the likelihood of being a bill or a stock is small, the change in color is suppressed to a small level by making $\alpha$ small. Incidentally, it goes without saying that other methods may be used as the method of changing the color.

As described above, in accordance with the seventh embodiment of the present invention, since the image conversion is effected in correspondence with the degree of the likelihood of being a bill or a stock, it is possible to form an image having a certain degree of picture quality even with respect to an original for which a determination is difficult. Hence, the amount of copies for which a determination of an "erroneous copy" is made can be reduced.

Fig. 17 illustrates an eighth embodiment of the present invention.

In the drawing, a bill-stock determining circuit is designated at 450-2, and in this embodiment, the arrangement is such that a CPU is provided to effect control in correspondence with the degree of the "likelihood of being a bill or a stock". A signal line 488 is adapted to control the degree of an italic image with respect to the italic image/mirror image processing circuit 464.

In conversion into an italic image, the configuration of the image is deformed as shown in Fig. 18. By virtue of the processing by the circuit 450-2, control can be effected via a signal 488 in such that manner that $\theta$ is set close to 0° from 90° in correspondence with the degree of the likelihood of being a bill or a stock.

Thus, in this embodiment, since the italic image/mirror image processing circuit 464 is controlled directly by the bill-stock determining circuit 450-20 to a degree corresponding to the degree of the likelihood of being a bill or a stock, the forgery preventing processing can be effected independently of the CPU 422. Hence, the program of the CPU 422 does not become complicated, and it makes it further difficult for the would-be forger to obviate the forgery preventing processing.

Fig. 19 illustrates a ninth embodiment of the present invention.

In the drawing, a bus changeover signal 481 is adapted to control a bus transceiver 472 with respect to the CPU bus 508, and a bill-stock determining circuit 450-5 constantly monitors the video signals r, g, b by operating independently of the CPU 422. If it is determined that the original is likely to be a bill or a stock, the CPU bus transceiver 472 is closed to exclusively use the VUBUS. Then, for instance, if specific parameters are written in the italic image/mirror image processing circuit 464, it is possible to print an italic image, as shown in Fig. 18.

Since such a conversion is effected to a degree corresponding to the degree of the likelihood of being a bill or a stock, when a determination is made that the original is obviously a bill or a stock (when the degree is large), a printed image which can be clearly distinguished from an authentic one is output, thereby making it possible to prevent forgery. On the other hand, if the determination is not clear-cut (the degree is small, the conversion is effected at a small degree, with the result that the possibility of imparting unexpected trouble to the operator is small.

Fig. 20 (a) - (c) illustrates other examples in which the output processing corresponding to the degree is effected forcedly.

Fig. 20 (a) is an example in which the image is output by being reduced in correspondence with the degree of the likelihood of being a bill or a stock by controlling the magnification processing circuit 467. In addition, Fig. 20 (b) is also an example in which an image is output by being subjected to lateral longitudinal independent magnification in correspondence with the degree of the likelihood of being a bill or a stock. Furthermore, Fig. 20 (c) is an example in which an image is output with the characters "copy" are added on with a size or density corresponding to the degree of the likelihood of being a bill or a stock by controlling the video signal synthesization circuit 470 and the character-pattern generator 473.

In addition, the color balance may be changed by controlling the color balance processing circuit 465, or an an image may be output in the form of mosaic texture corresponding to the degree of its likelihood by controlling the texture processing circuit. Alternatively, an image may be output by being subjected to blurring processing through filtering in correspondence with the degree of its likelihood by controlling the edge emphasis smoothing processing circuit 469.

Since the arrangement is provided such that processing for forgery prevention is carried out in the video processing unit 412, it is possible to assure the forgery prevention more positively.

Fig. 21 illustrates an arrangement in which a forgery preventing device is provided on the printer 402 side in accordance with a tenth embodiment of the present invention.

In the drawing, a bill-stock determining circuit 450-4 is provided in a printer controller 700, and monitors the video signals that are input sequentially thereinto. Upon determining that the original is a bill or a stock in the same way as described above, the bill-stock determining circuit 450-4 controls the video conversion circuit 451. Then, a printed image is changed substantially from the original by providing appropriate processing, such as by thinning out the image, making the lines smaller or larger, using half-tone dots, and adding on characters.

Fig. 22 illustrates an example of the video conversion circuit 451 which is adapted to effect thinning out. In the drawing, reference numeral 901 denotes a selector, while 902 denotes an AND gate. Numeral 903 denotes a J-K flip-flop, which effects thinning out for each picture element selected.

Fig. 23 is an example of a video conversion circuit 451′ for making lines smaller (or larger). In the drawing, numerals 910, 911 and 913 denote D-type flip-flops, while 912 denotes a selector. Numeral 914 denotes a comparator, and if an arrangement is provided such that a small (or larger) value is selected by the selector 912, it is possible to make the lines smaller (or larger) in the main scanning direction.

With respect to half-tone processing, an example of a processing circuit is not illustrated, but an arrangement may be provided such that a fine pattern of a bill or the like is made to form a moiré by subjecting a video image to fine-dot processing.

As described above, in accordance with this embodiment, since a forgery preventing device is incorporated on the printer side, it is possible to effectively prevent forgery even in a case where an image is read by a reader which is not provided with a forgery preventing device.

It should be noted that the circuit for determining a bill or a stock is not confined to those of the above-described embodiments, and it goes without saying that any circuit may be used for the same. In addition, as for the printer as well, not only the electrophotographic type of the above-described embodiments but also various other types may be used.

Fig. 24 illustrates an example in which a forgery preventing device is provided on the printer 402 side in accordance with an eleventh embodiment of the present invention.

In the drawing, a bill-stock determining circuit provided in the printer controller 700 is denoted by 450-6, and monitors video signals that are input sequentially thereinto. Upon determining that the original is a bill or a stock in the same way as described above, the bill-stock determining circuit 450-6 controls the video conversion circuit 451. in correspondence with the aforementioned degree of "likelihood". Then, a printed image is changed substantially from the original as appropriate processing is provided in correspondence with the degree, such as by thinning out the image, making the lines smaller or larger, using half-tone dots, and adding on characters.

Fig. 25 illustrates an example of the video conversion circuit 451 which is adapted to effect thinning out. In the drawing, reference numeral 1001 denotes a selector, while 1002 denotes an AND gate. An n-dividing counter 1003 outputs "1" once for each n-number of picture elements, and the selector 1001 selects 0 instead of the signals once for each n-number of picture elements via the AND gate 1002, thereby performing the thinning-out operation.

As described above, in accordance with this embodiment, since a forgery preventing device is incorporated on the printer side, it is possible to effectively prevent forgery even in a case where an image is read by a reader which is not provided with a forgery preventing device.

It should be noted that the circuit for determining a bill or a stock is not confined to those of the above-described embodiments, and it goes without saying that any circuit may be used for the same. In addition, as for the printer as well, not only the electrophotographic type of the above-described embodiments but also various other types may be used.

Fig. 26 illustrates a circuit diagram of a twelfth embodiment of the present invention which is applied to a color image reproducing apparatus using a laser beam printer.

In the drawing, a color original 2101 to be duplicated is placed on an original mounting glass table 2102. A light source 2103 is adapted to illuminate the original 2101, while a converging rod lens array 2104 (e.g., Selfock (tradename) lens array) which forms on a CCD line sensor 2105 an image of the light (an image of the original) reflected from the original illuminated by the light source 2103. The CCD line sensor 2105 is arranged such that filters of red (R), green (G), and blue (B) are applied on the line alternately, and converts the image of the original into electrical signals by separating it into the three primary colors. The aforementioned components 2103 - 2105 are integrally accommodated in a reading head (carriage) and is made to effect scanning by a scanning mechanism (not shown) in the direction of the arrow (subscanning direction) shown in the drawing, thereby scanning and reading the image depicted on the original 2101.

In addition, a sample hold circuit 2106 sample holds analog electrical signals (video signals) sent from the line sensor 2105 and converts them into time series signals of R, G, B. An A/D (analog-digital) converter 2107 subjects output signals from this sample hold circuit 2106 to analog-digital conversion. A shading correction circuit 2108 corrects variations in the sensitivity for one CCD line of the CCD line sensor 2105 and unevenness in illumination. A logarithm conversion circuit 2109 converts the R, G, and B signals corrected by the shading correction circuit 2108 into complementary-color density signals of cyan (C), magenta (M), and yellow (Y). Reference numeral 2110 denotes an inking circuit for generating ink (K, black) signals by extracting the minimum value among the C, M, and Y signals output from the logarithm conversion circuit 2109 and also denotes a UCR circuit for subtracting from the Y, M, and C signals a component corresponding to the K signal. A masking circuit 2111 corrects unnecessary absorption and the like of an output-side coloring material. A selector circuit 2112 selects signals to be sent to the printer (a laser beam printer in this embodiment) from among the Y, M, C, and K signals obtained as described above.

In addition, a gate circuit 2113 turns on and off outputs sent from the selector 2112 to the printer in response to control signals from a CPU (central arithmetic processing unit) 2128. A D/A (digital/analog) converter 2144 converts digital signals sent from the reader via the gate circuit 2113 into analog signals. A comparator 2116 compares the output of the D/A converter 2114 with a triangle wave signal of a predetermined period produced from a triangle wave generator 2115, obtaining a pulse width modulation (PWM) signal having a pulse width proportional to the image signal. This PWM signal is applied to a semiconductor laser 2118 via a laser driver 2117.

The light beam issued by the semiconductor laser 2118 is modulated by that PWM signal and reaches a rotating photosensitive drum 2121 (see the broken line in the drawing) via a polygon mirror 2119 rotating at high speed and a reflecting mirror 2120.

An electrostatic latent image formed on the photosensitive drum 2121 upon application of the laser beam is developed by a rotary developing device 2122 sequentially in the order of C, M, Y, and K, and is recorded as toner images of the respective colors. This toner image is transferred onto copy paper 2124 on the transfer drum 123 sequentially in the order of C, M, Y, and K. The copy paper 2124 is conveyed from a paper cassette (not shown) and is wound around the transfer drum 2123. Upon completion of the transfer of C, M, Y, and K images on four occasions, the copy paper 2124 is subjected to thermal fixing by a fixer 2126, and is discharged to the outside as a final reproduced image.

A determining circuit 2127 determines whether or not the pattern on the original 2101 is a specified pattern, and is controlled by the CPU 2128.

In the above-described arrangement, four times of scanning and reading is necessary with respect to the original 2101 in synchronism with the C, M, Y, and K outputs of the printer, and the selector 2112 changes over the output signals and sends to the printer signals corresponding to C, M, Y, or K. In this embodiment, therefore, the arrangement is such that the determining circuit 2127 is operated by a different algorithm in correspondence with a plurality of times of the original scanning operation, and its determining results are evaluated in a comprehensive manner, thereby improving the accuracy with which a specific pattern is determined.

Referring now to Fig. 27, a detailed description will be given of the operation of the above-described determining circuit 2127. Fig. 27 illustrates a detailed internal circuit configuration of the determining circuit 2127. The R, G, and B signals from the shading correction circuit 2108 shown in Fig. 26 are respectively subjected to binary processing by comparators 2201 - 2203 in the light of predetermined threshold values. An AND circuit 2205 calculates a logical product of the results of this binary processing, and outputs "1" only to the picture element which exceeds the threshold value with respect to all of R, G, and B.

An edge point detection circuit 2206 detects an edge point of the image of the original, and, when, as shown in Fig. 28, a bill 2302 , i.e., the original 2101, is placed on the original-mounting glass table 2102, this circuit 2206 detects an edge point on one side of the bill 2302 (a point on a straight line 2303). An angle detection circuit 2207 detects a rotating angle $\theta$ (see Fig. 28) of of the bill 2302 on the basis of the result of detection by the edge point detection circuit 2206. An affine conversion circuit 2208 cuts off a part (e.g., a hatched portion indicated at 2304 in Fig. 28) of an input image of the original on the basis of the detection result $\theta$ of the angle detection circuit 2207 and effects rotation by ($-\theta$) so as to be written in a memory 2209.

By virtue of the above-described arrangement, an image is written in a memory 2209 in the state in which the cut-out portion 2304 is not rotated. Meanwhile, a normal image pattern corresponding to the aforementioned cut-out portion 2304 is written in a memory 2210 from the CPU 2128. Then, the contents of the memory 2209 and the contents of the memory 2210 are superposed on each other in a matching circuit 2211, and a value of their correlation is determined. The value of correlation determined by the matching circuit 2211 is output again to the CPU 2128, where, on the basis of the value of correlation, a determination is made as to whether or not the input image coincides with a normal image pattern (hereinafter referred to as the normal pattern.

In the above-described operation, there is clearly an uncertainty of ±180° in angle detection in the angle detection circuit 2207, so that a single calculation of matching does not lead to a proper determination with respect to an image inverted by 180°. For this reason, in this embodiment, if an erected proper pattern is written in the memory 2210 in the first scanning of the original, while an inverted (180° inverted) proper pattern is written therein in the second scanning of the original, the 180° uncertainly can be overcome in two scanning and determining operations. Namely, in Fig. 26, the first scanning and determination are made to correspond to the outputting of a cyan image, while the second scanning and determination are made to correspond to the outputting of a magenta image, and if a determination is made on the basis of either of the two determining results that the input image coincides with the proper pattern, the the CPU 2128 immediately turns off the gate circuit 2113, cutting off an output of the image signal to the printer. By virtue of this arrangement, since at least the yellow image and the black image are not written onto the photosensitive drum 2121, the duplicated image outputted to the copy paper can be clearly discriminated from the input original, making it possible to suit the purpose of forgery.

Referring now to Fig. 27, a description will be given of a modification of this embodiment. In this modification, the above-described uncertainty concerning 180° can be overcome at one time by the provision of two systems of the circuit having a configuration such as the one shown in Fig. 27. Furthermore, the reading density is changed for the first scanning and the second scanning. Namely, during the first reading scanning, an image thinned out for each other picture element in the affine conversion circuit 2208 is written in the memory 2209, while, during the second reading scanning, the image is not thinned out and is written in the memory 2209 as it is with the density which has been read. Proper patterns corresponding to respective densities are written in advance in the memory 2210. By virtue of this arrangement, even in cases where it is impossible to obtain a value of sufficient correlation during the first matching, if a value of high correlation can be obtained during the second matching, the CPU 2128 can determine that the input image has coincided with the proper pattern.

As the other embodiments, the following various types are conceivably adopted:

- o Threshold values supplied to the comparators 2201 and the 2203 shown in Fig. 27 are varied during the first and second scannings.
- o An image to be written in the memory 2209 shown in Fig. 27 is shifted by the portion of a number of picture elements during the first and second scannings, thereby absorbing the misregistration between the input pattern and the proper pattern.
- o The proper pattern to be written in the memory 2210 shown in Fig. 27 is varied during the first and second scannings. For instance, the pattern of a ten thousand yen note is used during the first scanning, while the pattern is changed to the pattern of a thousand yen note during the second scanning.

In the foregoing embodiment, it goes without saying that the number of scannings is not restricted to two. In addition, the the number of scannings is not restricted to four times or less. For instance, the following processing is possible: If a determination is made during four or less scannings that the input image is close to a proper pattern, determination processing is continued by carrying out only the original scanning without discharging the copy paper from the transfer drum 2123, and the fifth transfer is effected when the input image coincides with the proper pattern, whereupon the overall surface of the duplicated copy is inked out.

A description will now be given of another modification of the twelfth embodiment of the present invention.

In this modification, an image is not output during the determining process of the first scanning, and if it is determined in this process that the original is close to a proper pattern of a bill or the like, scanning is stopped at that point of time. When it is not determined that the original is close to the proper pattern, four readings of images corresponding to C, M, Y, and K are continuously made and outputs of video signals are delivered to the printer, outputting a duplicated image.

When the scanning is suspended, a message is output from the CPU 2128 to a liquid crystal display 2130 or the like to the effect that the operator should rearrange the original or take other appropriate step, thereby prompting a restart. When a restart is designed by the operator through a key 2131, the determining and duplication processing such as those described above are restarted.

By virtue of this arrangement, it is possible to overcome faults in determination caused by a slight mispositioning of the original, angular errors thereof, etc.

The above-described method of determining a specific image by abstracting a specific pattern can be applied to all of the above-described embodiments.

As described above, in accordance with the twelfth embodiment of the present invention, the operation of effecting a determination by extracting a specific pattern from an image of the original is repeated a plurality of times, and the results of the repeated determinations are evaluated in a comprehensive manner, a final determination is made as to whether or not a specific pattern is included in the image of the original. Hence, it is possible to obtain the following advantages: The accuracy with which the determination is made is improved substantially, and the forgery preventing function of the color image copying apparatus is enhanced. At the same time, the possibility of hindering normal copying operations can be reduced to a remarkable degree.

The present invention is not restricted to the above-described embodiments, and various other modifications are possible without departing from the scope of the appended claims.

## Claims

**1.** An image processing apparatus comprising

supplying means (6;401) for supplying electrical image data representing an original to be processed, processing means (1;412) for processing the electrical image data supplied by said supplying means, and image outputting means (8;402) controlled by said processing means,

characterised by determining means (2,9;452) including storage means (2) in which is pre-stored in electrical data form an image or spectral color range of the subject matter of at least one specified original, for determining, using the electrical image data from the supplying means whether or not the image or spectral color range represented by that data is derived from a specified original and controlling means (1;413) for controlling a process function within the apparatus in dependence upon the determination result of said determining means.

**2.** An apparatus as claimed in claim 1, characterised in that a common image memory (7) is provided to supply said processing means (1;412) and said determining means (2,9;452) with the electrical image data supplied by said supplying means (6;401).

**3.** An apparatus as claimed in claim 1 or 2, characterised in that said storage means (2), comprises a memory (ROM2) for storing in advance electrical image data representing said at least one specified original, a determination being made by comparing the electrical data of the specified original with the electrical image data from said supplying means.

4. An apparatus as claimed in any one of claims 1-3, characterised in that said supplying means comprises an image reading device (6;61,62,63,65;401) for scanning an original and generating electrical image data.

5. An apparatus as claimed in claim 4, characterised in that the image reading device includes a sensor (63) for supplying data representing a plurality of colours.

6. An apparatus as claimed in any one of claims 1 to 5, characterised in that said controlling means (1;413) prohibits or changes the image processing of said processing means (1;412) when said determining means determines that the original to be processed represented by the electrical image data is an original having a specified image or identification feature.

7. An apparatus as claimed in any one of claims 1 to 6, characterised in that said controlling means is capable of inhibiting image output of said outputting means.

8. An apparatus as claimed in claim 4 or 5, characterised in that said controlling means is capable of inhibiting the image reading device after initiation of the scanning sequence.

9. An apparatus as claimed in claim 4 or 5, characterised in that said controlling means is capable of inhibiting the output of the image reading device.

10. An apparatus as claimed in any one of claims 1 to 6, characterised in that said controlling means is capable of changing the data output by said outputting means.

11. An apparatus as claimed in any one of claims 1 to 6, characterised in that said controlling means is capable of actuating means for disposing of an illegal copy produced by the image outputting means (8;402).

12. An apparatus as claimed in any one of claims 1 to 6, characterised in that said controlling means effects a change of a reproduction image.

13. An apparatus as claimed in any one of claims 1 to 6, characterised in that said electrical data from the supplying means represents a plurality of colors and in that said controlling means is capable of controlling said processing means to process the data to produce a monochrome image or any desired color except a faithful color reproduction of the original.

14. An apparatus as claimed in any one of claims 1-13, characterised in that the supplying means is a digital color reader (401), and in that said controlling means effects a change of masking processing in a masking UCR processing circuit (463) to achieve a change in a reproduced image so as to be a) unfaithful but readable, b) a specified color or c) monochrome.

15. An apparatus as claimed in any one of claims 1 to 14, characterised in that comparison is made between the electrical image data supplied by said supplying means and the color spectrum of the original stored in advance in a memory.

16. An apparatus as claimed in claim 14, characterised in that a change in the reproduced image is achieved by said controlling means which effects a change in the order of the color sequence in the masking UCR processing circuit (463).

17. An apparatus as claimed in any one of claims 1 to 6, 12 or 14, characterised in that said image processing means includes an italic image/mirror image processing circuit (464) which is controlled by said determining means (450-3) to effect italic image or mirror image at the output of the processing means (412).

18. An apparatus as claimed in any one of claims 1 to 6, 12 or 14, characterised in that said image processing means includes a magnification circuit (467) which is controlled by said determining means (450-3) to effect a change in image size e.g. reduction of lateral elongation.

**19.** An apparatus as claimed in any one of claims 1 to 6, 12 or 14, characterised in that said image processing means includes a video signal synthesization circuit (470) which is controlled by said determining means (450-3) to effect adding of character e.g. the word "COPY".

**20.** An apparatus as claimed in any one of claims 1 to 6 or 14, characterised in that said image processing means includes a color balance processing circuit (465), a color conversion circuit (466), a texture processing circuit (468), a filter circuit (469), or a LOG conversion circuit (462), whereby respectively color balance can be changed, a specific color or monochrome can be outputted, a mosaic texture achieved, fine lines deleted, the image blurred or negative-positive conversion of the image performed, in dependence upon the output of the determining means (450-3).

**21.** An apparatus as claimed in any one of claims 1 to 4, characterised in that said determining circuit (450-4) is provided within the image outputting means (402), a video conversion circuit (451) being controlled by said determining circuit to achieve a change in the output image, viz thinning out of the image, making the lines thinner or thicker, using half-tone dots, or adding on characters.

**22.** An apparatus as claimed in any one of claims 1 to 4, characterised in that said determining circuit (450-4) is provided within the image outputting means (402), a video conversion circuit (451) being controlled by said determining circuit such that a fine pattern of the original is made to form a moiré by subjecting the image to fine dot processing.

**23.** An apparatus as claimed in any one of claims 1 to 22, characterised in that said processing means performs digital image processing based on the electrical image data supplied by said supplying means.

**24.** An image processing method comprising the steps of supplying electrical image data representing an original, processing the electrical image data supplied in said supplying step, and outputting a processed image; characterised by determining, using the electrical image data supplied in said supplying step and an image or spectral color range of the subject matter of at least one specified original stored in a memory in electrical data form, whether or not the image or spectral color range represented by the supplied image data is derived from a specified original, and controlling a process function of said method in dependence upon the determination result of said determining step.

**25.** A method as claimed in claim 24, characterised in that the electrical image data supplied by the supplying means is stored in a common image memory for use in said processing of the electrical image data and said determination.

**26.** An apparatus as claimed in any one of claims 1 to 14, characterised in that said determining circuit (450-4) is provided within the image outputting means (402), a video conversion circuit (451) being controlled by said determining circuit to achieve a change in the output image by thinning out of the image, making the lines thinner or thicker, using half-tone dots, or adding on characters.

**27.** An apparatus as claimed in any of claims 1 to 23, wherein said image outputting means includes an image printer (2114-2126).

**28.** An apparatus as claimed in claim 27, wherein said printer is a laser printer whose laser beam is controlled by the determining means (2127) to effect a change in the output image in dependence upon the output state of the determining means.

**29.** An apparatus as claimed in any one of claims 1 to 14, 26 to 28, characterised in that comparison is made by comparing a pattern of a part or the whole of the image of the original with electrical pattern data stored in advance.

**30.** An apparatus as claimed in claim 29, wherein said pattern of the original is compared with first and second reference patterns corresponding to the same specified original but with different orientations, and the results of these comparisons are combined to derive an output of the determining means.

31. An apparatus as claimed in claim 29, wherein said pattern of the original is compared with patterns derived from different specified originals, and the results of said comparisons are combined to derive an output of the determining means.

32. An apparatus according to claim 29, wherein said pattern of the original is compared with pattern data of a specified original at a first density and a second density, in order to derive an output of the determining means.

33. An apparatus as claimed in claim 29, wherein said pattern of the original and said electrical pattern data are compared a plurality of times in different relative positions.

34. An apparatus as claimed in any of claims 1 to 14 and 26 to 30, wherein the determining means includes storage means in which is pre-stored in electrical data form both an image and spectral color range of the subject matter of at least one specified original, and wherein the determining means determines whether or not the electrical image data from the supplying means is derived from a specified original by comparing both the image and the spectral color range of the image with the pre-stored electrical data.

35. An apparatus according to any of claims 1 to 23 and 26 to 34, wherein said determining means further comprises means for determining the size of the original or means for detecting a magnetic pattern or watermark pattern or the like in the original.

36. An apparatus as claimed in any one of claims 1 to 23 and 26 to 35, characterised in that said processing means and said determining means operate in parallel.

37. An apparatus as claimed in any of claims 1 to 23 and 26 to 36, further comprising means for generating a warning message in response to a determination that the original to be processed is derived from a specified original.

38. An image processing method comprising steps of supplying electrical image data representing an original, processing the electrical image data supplied in said supplying step and outputting a reproduction image; characterised by determining using the electrical image data supplied in said supplying step and an image or spectral color range of the subject matter of at least one specified original stored in a memory in electrical data form, whether or not the original or spectral color range represented by the supplied image data is derived from a specified original, and controlling a process function of said method in dependence upon the determination result of said determining step.

**Patentansprüche**

1. Gerät zur Bildherstellung mit
einer Zuführungseinrichtung (6; 401) zum Zuführen von ein zu verarbeitendes Original repräsentierenden elektrischen Bilddaten,
einer Verarbeitungseinrichtung (1; 412) zum Verarbeiten der von der Zuführungseinrichtung zugeführten elektrischen Bilddaten, und
einer von der Verarbeitungseinrichtung gesteuerten Ausgabeeinrichtung (8; 402), **gekennzeichnet durch**
eine Bestimmungseinrichtung (2, 9; 452), die eine Speichereinrichtung (2) enthält, in der vorab in Form elektrischer Daten ein Bild oder ein spektraler Farbbereich des Gegenstands von zumindest einem bestimmten Original gespeichert ist, zum Bestimmen anhand der elektrischen Bilddaten der Zuführungseinrichtung, ob das Bild oder der spektrale Farbbereich, das bzw. der durch diese Daten repräsentiert ist, von dem bestimmten Original hergeleitet ist oder nicht, und eine Steuereinrichtung (1; 413) zum Steuern einer Verarbeitungsfunktion innerhalb des Geräts in Abhängigkeit des Bestimmungsergebnisses der Bestimmungseinrichtung.

2. Gerät nach Anspruch 1, **gekennzeichnet durch** einen gemeinsamen Bildspeicher (7) zum Zuführen der von der Zuführungseinrichtung (6; 401) zugeführten elektrischen Bilddaten zu der Verarbeitungseinrichtung (1, 412) und der Bestimmungseinrichtung (2, 9; 452).

3. Gerät nach Anspruch 1 oder 2, **dadurch gekennzeichnet, daß** die Speichereinrichtung (2) einen Speicher (ROM2) enthält, in dem vorab die das zumindest eine bestimmte Original repräsentierenden elektrischen Bilddaten gespeichert sind, wobei eine Bestimmung durch Vergleichen der elektrischen Daten für das bestimmte Original mit den elektrischen Bilddaten aus der Zuführungseinrichtung erfolgt.

4. Gerät nach einem der Ansprüche 1 bis 3, **dadurch gekennzeichnet, daß** die Zuführungseinrichtung eine Bildleseeinrichtung (6; 61, 62, 63, 65; 401) zum Abtasten eines Originals und zum Erzeugen elektrischer Bilddaten enthält.

5. Gerät nach Anspruch 4, **dadurch gekennzeichnet, daß** die Bildleseeinrichtung einen Sensor (63) zum Zuführen von eine Vielzahl von Farben repräsentierenden Daten enthält.

6. Gerät nach einem der Ansprüche 1 bis 5, **dadurch gekennzeichnet, daß** die Steuereinrichtung (1; 413) die Bildverarbeitung der Verarbeitungseinrichtung (1; 412) verhindert oder ändert, wenn die Bestimmungseinrichtung bestimmt, daß das zu verarbeitende, durch die elektrischen Bilddaten repräsentierte Original ein Original ist, das ein bestimmtes Bild oder Identifikationsmerkmal aufweist.

7. Gerät nach einem der Ansprüche 1 bis 6, **dadurch gekennzeichnet, daß** die Steuereinrichtung dafür geeignet ist, eine Bildausgabe aus der Ausgabeeinrichtung zu sperren.

8. Gerät nach Anspruch 4 oder 5, **dadurch gekennzeichnet, daß** die Steuereinrichtung dafür geeignet ist, die Bildleseeinrichtung nach dem Beginn der Abtastfolge zu sperren.

9. Gerät nach Anspruch 4 oder 5, **dadurch gekennzeichnet, daß** die Steuereinrichtung dafür geeignet ist, die Ausgabe aus der Bildleseeinrichtung zu sperren.

10. Gerät nach einem der Ansprüche 1 bis 6, **dadurch gekennzeichnet, daß** die Steuereinrichtung dafür geeignet ist, die Datenausgabe der Ausgabeeinrichtung zu verändern.

11. Gerät nach einem der Ansprüche 1 bis 6, **dadurch gekennzeichnet, daß** die Steuereinrichtung dafür geeignet ist, eine Vorrichtung zum Beseitigen einer mittels der Bildausgabevorrichtung (8; 4092) erzeugten illegalen Kopie zu betätigen.

12. Gerät nach einem der Ansprüche 1 bis 6, **dadurch gekennzeichnet, daß** die Steuereinrichtung eine Änderung eines Reproduktionsbilds bewirkt.

13. Gerät nach einem der Ansprüche 1 bis 6, **dadurch gekennzeichnet, daß** die elektrischen Daten aus der Zuführungseinrichtung eine Vielzahl von Farben darstellen, und daß die Steuereinrichtung dafür geeignet ist, die Verarbeitungseinrichtung so zu steuern, daß die Daten derart verarbeitet werden, daß ein einfarbiges Bild oder irgendeine gewünschte Farbe außer einer naturgetreuen Farbwiedergabe erzeugt wird.

14. Gerät nach einem der Ansprüche 1 bis 13, **dadurch gekennzeichnet, daß** die Zuführungseinrichtung ein digitales, farbtüchtiges Lesegerät (401) ist, und daß die Steuereinrichtung eine Änderung des Maskierens bei einer Farbrücknahme-Maskierungs-Verarbeitungsschaltung (463) bewirkt, um eine Änderung in einem reproduzierten Bild derart zu erzielen, daß dieses a) nicht naturgetreu, aber lesbar, b) in einer bestimmten Farbe oder c) einfarbig wiedergegeben wird.

15. Gerät nach einem der Ansprüche 1 bis 14, **dadurch gekennzeichnet, daß** ein Vergleich zwischen den mittels der Zuführungseinrichtung zugeführten elektrischen Bilddaten und dem vorab in einem Speicher gespeicherten Farbspektrum des Originals erfolgt.

16. Gerät nach Anspruch 14, **dadurch gekennzeichnet, daß** eine Änderung in dem reproduzierten Bild mittels der Steuereinrichtung erzielt wird, welche eine Änderung der Reihenfolge der Farbsequenz in der Farbrücknahme-Maskierungs-Verarbeitungsschaltung (463) bewirkt.

17. Gerät nach einem der Ansprüche 1 bis 6, 12 oder 14, **dadurch gekennzeichnet, daß** die Bildverarbeitungseinrichtung eine Schrägbild-/Spiegelbild-Verarbeitungsschaltung (464) enthält, die von der Bestimmungseinrichtung (450-3) zum Erhalten eines Schrägbildes oder Spiegelbildes als Ausgabe der Verarbeitungseinrichtung (412) gesteuert ist.

**18.** Gerät nach einem der Ansprüche 1 bis 6, 12 oder 14, **dadurch gekennzeichnet, daß** die Bildverarbeitungseinrichtung eine Vergrößerungsschaltung (467) enthält, die von der Bestimmungseinrichtung (450-3) zum Bewirken einer Änderung der Bildgröße, beispielsweise Verkürzung der Längsausdehnung, gesteuert ist.

**19.** Gerät nach einem der Ansprüche 1 bis 6, 12 oder 14, **dadurch gekennzeichnet, daß** die Bildverarbeitungseinrichtung eine Videosignal-Synthetisierungs-Schaltung (470) enthält, die von der Bestimmungseinrichtung (450-3) zum Bewirken eines Hinzufügens von Zeichen, beispielsweise des Wortes "KOPIE", gesteuert ist.

**20.** Gerät nach einem der Ansprüche 1 bis 6 oder 14, **dadurch gekennzeichnet, daß** in der Bildverarbeitungseinrichtung eine Farbabstimmungs-Verarbeitungsschaltung (465), eine Farbumwandlungs-Schaltung (466), eine Textur-Verarbeitungsschaltung (468), eine Filterschaltung (469) oder eine LOG-Umwandlungs-Schaltung (462), durch die jeweils in Abhängigkeit vom Ausgangssignal der Bestimmungseinrichtung (450-3) die Farbabstimmung verändert werden kann, eine bestimmte Farbe oder Schwarzweiß ausgegeben werden kann, eine Mosaik-Textur erzielt werden kann, feine Linien ausgelöscht werden können, das Bild verwischt oder eine negativ-positiv Wandlung des Bilds durchgeführt werden kann.

**21.** Gerät nach einem der Ansprüche 1 bis 4, **dadurch gekennzeichnet, daß** die Bestimmungsschaltung (450-3) ein Bestandteil der Bildausgabeeinrichtung (402) ist, wobei eine Video-Umwandlungsschaltung (451) von der Bestimmungsschaltung zum Erreichen einer Änderung im Ausgabebild, beispielsweise Ausdünnen des Bilds, Verschmälern oder Verbreitern von Linien, Verwenden von Grauwertpunkten oder Hinzufügen von Zeichen, gesteuert wird.

**22.** Gerät nach einem der Ansprüche 1 bis 4, **dadurch gekennzeichnet, daß** die Bestimmungsschaltung (450-3) ein Bestandteil der Bildausgabeeinrichtung (402) ist, wobei eine Video-Umwandlungsschaltung (451) von der Bestimmungsschaltung derart gesteuert wird, daß ein feines Muster des Originals ein Moiré-Muster bildet, indem das Bild einer Feinpunkt-Verarbeitung unterzogen wird.

**23.** Gerät nach einem der Ansprüche 1 bis 22, **dadurch gekennzeichnet,** daß die Verarbeitungseinrichtung auf Grundlage der von der Zuführungseinrichtung zugeführten elektrischen Bilddaten eine digitale Bildverarbeitung durchführt.

**24.** Bildverarbeitungsverfahren mit den Schritten
Zuführen von ein Original repräsentierenden elektrischen Bildsignalen, Verarbeiten der in dem Zuführungsschritt zugeführten elektrischen Bilddaten und Ausgeben eines verarbeiteten Bilds, **gekennzeichnet durch**
Bestimmen aufgrund der in dem Zuführungsschritt zugeführten elektrischen Bilddaten und eines in Form elektrischer Daten in einem Speicher gespeicherten Bilds oder spektralen Farbbereichs des Gegenstands von zumindest einem bestimmten Original, ob das Bild oder der spektrale Farbbereich, das bzw. der durch die zugeführten Bilddaten repräsentiert ist, von einem bestimmten Original hergeleitet ist oder nicht, und
Steuern einer Verarbeitungsfunktion des Verfahrens in Abhängigkeit vom Bestimmungsergebnis des Bestimmungsschritts.

**25.** Verfahren nach Anspruch 24, **dadurch gekennzeichnet, daß** die von der Zuführungseinrichtung zugeführten elektrischen Daten zur Verwendung bei der Verarbeitung der elektrischen Bilddaten und der Bestimmung in einem gemeinsamen Bildspeicher gespeichert werden.

**26.** Gerät nach einem der Ansprüche 1 bis 14, **dadurch gekennzeichnet, daß** die Bestimmungsschaltung (450-3) Bestandteil der Bildausgabeeinrichtung (402) ist, wobei eine Video-Umwandlungsschaltung (451) von der Bestimmungsschaltung zum Erreichen einer Änderung im Ausgabebild durch Ausdünnen des Bildes, Verschmälern oder Verbreitern der Linien, Verwenden von Grauwertpunkten oder Hinzufügen von Zeichen gesteuert wird.

**27.** Gerät nach einem der Ansprüche 1 bis 23, bei dem die Bildausgabeeinrichtung einen Bild-Drucker (2114 - 2126) enthält.

**28.** Gerät nach Anspruch 27, bei dem der Drucker ein Laser-Drucker ist, dessen Laserstrahl von der Bestimmungseinrichtung (2127) gesteuert wird, um in Abhängigkeit vom Ausgabezustand der Bestimmungseinrichtung eine Änderung des Ausgabebilds zu bewirken.

**29.** Gerät nach einem der Ansprüche 1 bis 14, 26 bis 28, **dadurch gekennzeichnet, daß** ein Vergleich erfolgt, indem ein Muster eines Teils oder des Ganzen des Bilds des Originals mit den vorab gespeicherten elektrischen Musterdaten verglichen wird.

**30.** Gerät nach Anspruch 29, bei dem das Muster des Originals mit ersten und zweiten Bezugsmustern verglichen wird, welche dem gleichen bestimmten Original, jedoch mit unterschiedlichen Ausrichtungen entsprechen, und bei dem die Ergebnisse dieser Vergleiche zum Erhalten eines Ausgangssignals der Bestimmungseinrichtung kombiniert werden.

**31.** Gerät nach Anspruch 29, bei dem das Muster des Originals mit von verschiedenen bestimmten Originalen erhaltenen Mustern verglichen wird und bei dem die Ergebnisse der Vergleiche zum Erhalten einer Ausgabe der Bestimmungseinrichtung kombiniert werden.

**32.** Gerät nach Anspruch 29, bei dem das Muster des Originals mit Musterdaten eines bestimmten Originals bei einer ersten Dichte und einer zweiten Dichte verglichen wird, um ein Ausgangssignal der Bestimmungseinrichtung zu erhalten.

**33.** Gerät nach Anspruch 29, bei dem das Muster des Originals und die elektrischen Mustersignale mehrfach in verschiedenen Relativlagen verglichen werden.

**34.** Gerät nach einem der Ansprüche 1 bis 14 und 26 bis 30, bei dem die Bestimmungseinrichtung eine Speichereinrichtung enthält, in der vorab in Form von elektrischen Daten sowohl ein Bild als auch ein spektraler Farbbereich des Gegenstands von zumindest einem bestimmten Original gespeichert sind, und bei dem die Bestimmungseinrichtung durch Vergleichen sowohl des Bilds als auch des spektralen Farbbereichs des Bilds mit den vorab gespeicherten elektrischen Daten bestimmt, ob die elektrischen Bilddaten aus der Zuführungseinrichtung von einem bestimmten Original hergeleitet sind oder nicht.

**35.** Gerät nach einem der Ansprüche 1 bis 23 und 26 bis 34, bei dem die Bestimmungseinrichtung ferner eine Einrichtung zum Bestimmen der Größe des Originals oder eine Einrichtung zum Erfassen eines magnetischen Musters oder eines Wasserzeichenmusters oder dergleichen im Original enthält.

**36.** Gerät nach einem der Ansprüche 1 bis 23 und 26 bis 35, **dadurch gekennzeichnet, daß** die Verarbeitungseinrichtung und die Bestimmungseinrichtung parallel arbeiten.

**37.** Gerät nach einem der Ansprüche 1 bis 23 und 26 bis 36, das ferner eine Vorrichtung zum Erzeugen einer Warnmeldung auf eine Bestimmung hin enthält, daß das zu verarbeitende Original von einem bestimmten Original hergeleitet ist.

**38.** Bildverarbeitungsverfahren mit den Schritten
Zuführen von ein Original repräsentierenden elektrischen Bilddaten,
Verarbeiten der in dem Zuführungsschritt zugeführten elektrischen Bilddaten und Ausgeben eines reproduzierten Bilds, gekennzeichnet **durch**
Bestimmen aufgrund der in dem Zuführungsschritt zugeführten elektrischen Bilddaten und eines in Form elektrischer Daten in einem Speicher gespeicherten Bilds oder spektralen Farbbereichs des Gegenstands von zumindest einem bestimmten Original, ob das Bild oder der spektrale Farbbereich, das bzw. der durch die zugeführten Bilddaten repräsentiert ist, von einem bestimmten Original hergeleitet ist oder nicht, und
Steuern einer Verarbeitungsfunktion des Verfahrens in Abhängigkeit des Bestimmungsergebnisses des Bestimmungsschritts.

## Revendications

1. **Appareil de traitement d'images comprenant:**
un moyen de fourniture (6; 401) pour fournir une donnée d'image électrique représentant un original à traiter, un moyen de traitement (1; 412) pour traiter la donnée d'image électrique fournie par ledit moyen de fourniture; et un moyen de sortie d'image (8; 402) commandé par ledit moyen de traitement,
caractérisé par un moyen de détermination (2,9;452) comportant un moyen de stockage (2) dans lequel est préalablement stockée, sous la forme d'une donnée électrique, une image ou une gamme de couleurs spectrales du sujet d'au moins un original spécifié, pour déterminer, par utilisation de la donnée d'image électrique provenant du moyen de fourniture, si l'image ou la gamme de couleurs spectrales représentée par cette donnée est ou non dérivée d'un original spécifié, et un moyen de commande (1; 413) pour commander une fonction de traitement de l'appareil en fonction du résultat de la détermination dudit moyen de détermination.

2. Appareil selon la revendication 1, caractérisé en ce qu'une mémoire d'image commune (7) est prévue pour fournir audit moyen de traitement (1;412) et audit moyen de détermination (2,9;452) la donnée d'image électrique fournie par ledit moyen de fourniture (6;401).

3. Appareil selon la revendication 1 ou 2, caractérisé en ce que ledit moyen de stockage (2) comprend une mémoire (ROM2) pour stocker à l'avance une donnée d'image électrique représentant au moins ledit original spécifié, une détermination étant effectuée par comparaison de la donnée électrique de l'original spécifié à la donnée électrique provenant dudit moyen de fourniture.

4. Appareil selon l'une quelconque des revendications 1-3, caractérisé en ce que ledit moyen de fourniture comprend un dispositif de lecture d'image (6;61,62,63,65;401) pour balayer un original et générer des données d'image électriques.

5. Appareil selon la revendication 4, caractérisé en ce que le dispositif de lecture d'image comporte un capteur (63) pour fournir des données représentatives d'un ensemble de couleurs.

6. Appareil selon l'une quelconque des revendications 1 à 5, caractérisé en ce que ledit moyen de commande (1;413) interdit ou modifie le traitement d'image dudit moyen de traitement (1;412) lorsque ledit moyen de détermination détermine que l'original à traiter représenté par les données d'image électriques est un original ayant une image spécifiée ou un trait d'identification.

7. Appareil selon l'une quelconque des revendications 1 à 6, caractérisé en ce que ledit moyen de commande est capable d'inhiber la sortie d'image dudit moyen de sortie.

8. Appareil selon les revendications 4 ou 5, caractérisé en ce que ledit moyen de commande est capable d'inhiber le dispositif de lecture d'image après déclenchement de la séquence de balayage.

9. Appareil selon les revendications 4 ou 5, caractérisé en ce que ledit moyen de commande est capable d'inhiber la sortie du dispositif de lecture d'image.

10. Appareil selon l'une quelconque des revendications 1 à 6, caractérisé en ce que ledit moyen de commande est capable de modifier la sortie de données effectuée par ledit moyen de sortie.

11. Appareil selon l'une quelconque des revendications 1 à 6, caractérisé en ce que ledit moyen de commande est capable d'actionner un moyen pour éliminer une copie illégale produite par le moyen de sortie d'image (8;402).

12. Appareil selon l'une quelconque des revendications 1 à 6, caractérisé en ce que ledit moyen de commande effectue une modification d'une image de reproduction.

13. Appareil selon l'une quelconque des revendications 1 à 6, caractérisé en ce que ladite donnée électrique provenant dudit moyen de fourniture représente un ensemble de couleurs et en ce que ledit moyen de commande est capable de commander ledit moyen de traitement pour traiter la donnée afin de produire une image monochrome ou d'une couleur quelconque souhaitée, à l'exception d'une reproduction en couleur fidèle de l'original.

**14.** Appareil selon l'une quelconque des revendications 1-13, caractérisé en ce que le moyen de fourniture est un lecteur de couleur numérique (401) et en ce que ledit moyen de commande effectue une modification d'un traitement de masquage dans un circuit de traitement d'élimination des sous-couleurs (UCR) à masquage (463) pour réaliser une modification de l'image reproduite de façon qu'elle soit a) peu fidèle mais lisible, b) d'une couleur spécifiée ou c) monochrome.

**15.** Appareil selon l'une quelconque des revendications 1 a 14, caractérisé en ce que la comparaison est effectuée entre la donnée d'image électrique fournie par ledit moyen de fourniture et le spectre de couleurs de l'original stocké à l'avance dans une mémoire.

**16.** Appareil selon la revendication 14, caractérisé en ce qu'une modification de l'image reproduite est réalisée par ledit moyen de commande qui effectue une modification de l'ordre de la séquence des couleurs dans le circuit de traitement d'élimination des sous-couleurs (UCR) à masquage (463).

**17.** Appareil selon l'une quelconque des revendications 1 à 6, 12 ou 14, caractérisé en ce que ledit moyen de traitement d'image comporte un circuit de traitement d'image italique/image miroir (464) qui est commandé par ledit moyen de détermination (450-3) pour produire une image italique ou une image miroir à la sortie du moyen de traitement (412).

**18.** Appareil selon l'une quelconque des revendications 1 à 6, 12 ou 14, caractérisé en ce que ledit moyen de traitement comporte un circuit de grossissement (467) qui est commandé par ledit moyen de détermination (450-3) pour effectuer une modification de la taille de l'image, par exemple une réduction de l'allongement latéral.

**19.** Appareil selon l'une quelconque des revendications 1 à 6, 12 ou 14, caractérisé en ce que ledit moyen de traitement d'image comporte un circuit de synthèse de signal vidéo (470) qui est commandé par ledit moyen de détermination (450-3) pour effectuer l'addition de caractères, par exemple du mot "COPY".

**20.** Appareil selon l'une quelconque des revendications 1 à 6 ou 14, caractérisé en ce que ledit moyen de traitement d'image comporte un circuit de traitement d'équilibrage des couleurs (465), un circuit de conversion des couleurs (466), un circuit de traitement de texture (468), un circuit de filtrage (469), ou un circuit de conversion LOG (462), au moyen desquels on peut respectivement modifier l'équilibre des couleurs, sortir une couleur spécifique ou un monochrome, réaliser une texture mosaïque, éliminer des lignes fines, rendre l'image floue ou effectuer une conversion négative-positive de l'image, selon la sortie du moyen de détermination (450-3).

**21.** Appareil selon l'une quelconque des revendications 1 à 4, caractérisé en ce que ledit moyen de détermination (450-4) est disposé dans le moyen de sortie d'image (402), un circuit de conversion vidéo (451) étant commandé par ledit moyen de détermination pour réaliser une modification de l'image de sortie, c'est-à-dire affaiblir l'image, affiner ou épaissir les lignes, utiliser des points de trame, ou ajouter des caractères.

**22.** Appareil selon l'une quelconque des revendications 1 à 4, caractérisé en ce que ledit moyen de détermination (450-4) est disposé dans le moyen de sortie d'image (402), un circuit de conversion vidéo (451) étant commandé par ledit circuit de détermination de façon qu'un motif de l'original soit mis sous forme d'un moiré par soumission de l'image à un traitement de tramage fin.

**23.** Appareil selon l'une quelconque des revendications 1 à 22, caractérisé en ce que ledit moyen de traitement effectue un traitement d'image numérique sur la base de la donnée d'image électrique fournie par ledit moyen de fourniture.

**24.** Procédé de traitement d'image comprenant les étapes consistant à fournir une donnée d'image électrique représentant un original, traiter la donnée d'image électrique fournie lors de ladite étape de fourniture, et produire en sortie une image traitée, caractérisé par le fait qu'on détermine, en utilisant la donnée d'image électrique fournie lors de ladite étape de fourniture et une image ou une gamme de couleurs spectrales du sujet d'au moins un original spécifié stocké dans une mémoire sous forme de donnée électrique, si l'image ou la gamme de couleurs spectrales représentée par la donnée d'image fournie est ou non dérivée d'un original spécifié, et qu'on commande une fonction de traitement dudit procédé selon le résultat de la détermination effectuée lors de ladite étape de détermination.

**25.** Procédé selon la revendication 24, caractérisé en ce que la donnée d'image électrique fournie par ledit moyen de fourniture est stockée dans une mémoire d'image commune pour être utilisée dans ledit traitement de ladite donnée d'image électrique et dans ladite détermination.

**26.** Appareil selon l'une quelconque des revendications 1 à 14, caractérisé en ce que ledit circuit de détermination (450-4) est disposé dans le moyen de sortie d'image (402), un circuit de conversion vidéo (451) étant commandé par ledit circuit de détermination pour réaliser une modification de l'image de sortie par affaiblissement de l'image, affinage ou épaississement des lignes, utilisation de points de trame, ou addition de caractères.

**27.** Appareil selon l'une quelconque des revendications 1 à 23, dans lequel ledit moyen de sortie d'image comporte une imprimante d'image (2114-2126).

**28.** Appareil selon la revendication 27, dans lequel ladite imprimante est une imprimante laser dont le faisceau laser est commandé par le moyen de détermination (2127) pour effectuer une modification de l'image de sortie en fonction de l'état de la sortie du moyen de détermination.

**29.** Appareil selon l'une quelconque des revendications 1 à 14, 26 à 28, caractérisé en ce qu'une comparaison est effectuée par comparaison du motif d'une partie ou de l'ensemble de l'image avec une donnée de motif électrique stockée à l'avance.

**30.** Appareil selon la revendication 29, dans lequel ledit motif de l'original est comparé à des premier et second motifs de référence correspondant au même original spécifié mais avec des orientations différentes, et dans lequel les résultats de ces comparaisons sont combinés pour dériver une sortie du moyen de détermination.

**31.** Appareil selon la revendication 29, dans lequel ledit motif de l'original est comparé à des motifs dérivés d'originaux spécifiés différents, et dans lequel les résultats desdites comparaisons sont combinés pour dériver une sortie du moyen de détermination.

**32.** Appareil selon la revendication 29, dans lequel ledit motif de l'original est comparé à une donnée de motif d'un original spécifié à une première densité et à une seconde densité, pour dériver une sortie du moyen de détermination.

**33.** Appareil selon la revendication 29, dans lequel ledit motif de l'original et ladite donnée de motif électrique sont comparés plusieurs fois dans différentes positions relatives.

**34.** Appareil selon l'une quelconque des revendications 1 à 14 et 26 à 30, dans lequel le moyen de détermination comporte un moyen de stockage dans lequel sont préalablement stockées sous forme de donnée électrique une image et une gamme de couleurs spectrales du sujet d'au moins un original spécifié, et dans lequel le moyen de détermination détermine si la donnée d'image électrique provenant du moyen de fourniture est ou non dérivée d'un original spécifié par comparaison de l'image et de la gamme de couleurs spectrales de l'image, à la donnée électrique préalablement stockée.

**35.** Appareil selon l'une quelconque des revendications 1 à 23 et 26 à 34, dans lequel le moyen de détermination comprend en outre un moyen pour déterminer la taille de l'original ou un moyen pour détecter un motif magnétique ou un motif en filigrane, ou autre, dans l'original.

**36.** Appareil selon l'une quelconque des revendications 1 à 23 et 26 à 35, caractérisé en ce que ledit moyen de traitement et ledit moyen de détermination fonctionnent en parallèle.

**37.** Appareil selon l'une quelconque des revendications 1 à 23 et 26 à 36, comprenant en outre un moyen pour générer un message d'alarme en réponse à une détermination du fait que l'original à traiter est dérivé d'un original spécifié.

**38.** Procédé de traitement d'image comprenant les étapes consistant à fournir une donnée d'image électrique représentant un original, traiter la donnée d'image électrique fournie lors de ladite étape de fourniture et produire en sortie une image de reproduction; caractérisé par le fait qu'on détermine, en utilisant la donnée d'image électrique fournie lors de ladite étape de fourniture et une image ou une gamme de couleurs spectrales du sujet d'au moins un original spécifié stocké dans une mémoire sous forme de donnée électrique, si l'original ou la gamme de couleurs spectrales représentée par la donnée d'image fournie est ou non dérivé d'un original spécifié, et qu'on commande une fonction de traitement dudit procédé selon le résultat de la détermination effectuée lors de ladite étape de détermination.

FIG. 1

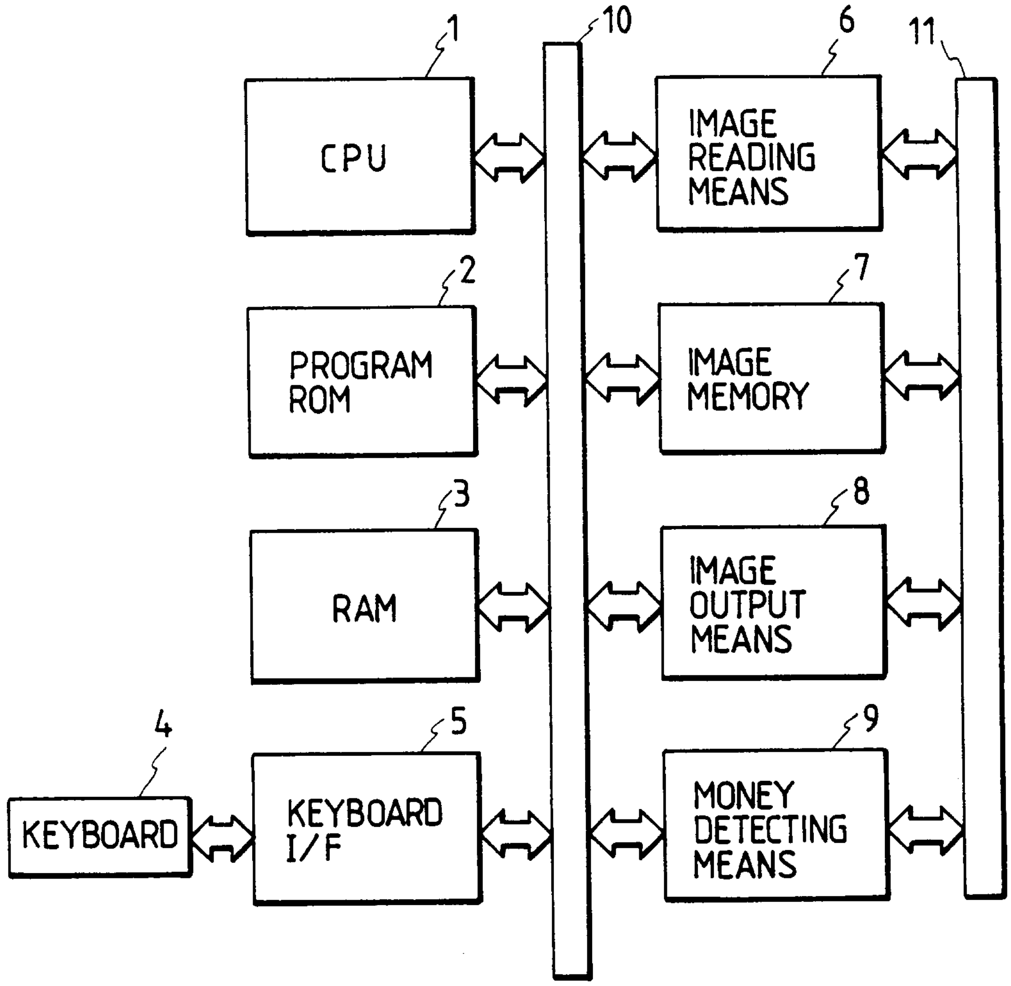
1
10
6
11
CPU
IMAGE
READING
MEANS
2
7
PROGRAM
ROM
IMAGE
MEMORY
3
8
RAM
IMAGE
OUTPUT
MEANS
4
5
9
KEYBOARD
KEYBOARD
I/F
MONEY
DETECTING
MEANS

FIG. 2

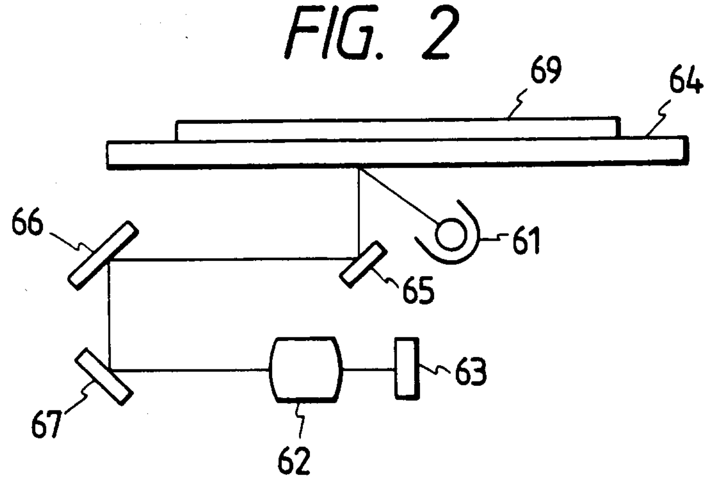
69
64
66
61
65
63
67
62

FIG. 3

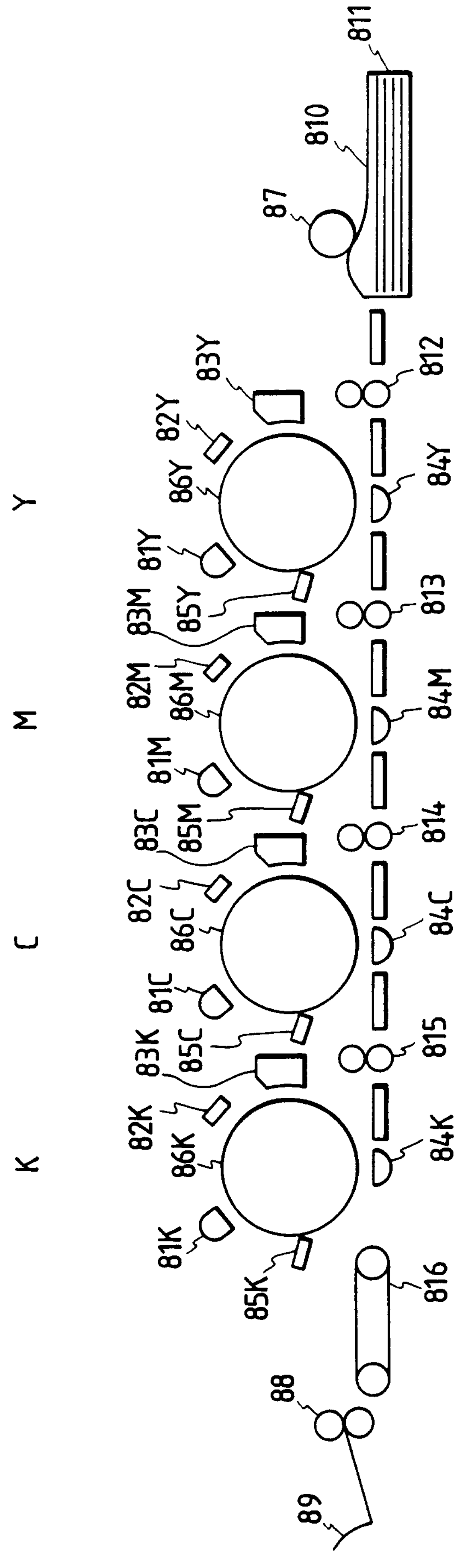
K
C
M
Y
811
810
87
812
813
814
815
816
83Y
82Y
86Y
81Y
84Y
85Y
83M
82M
86M
81M
84M
85M
83C
82C
86C
81C
84C
85C
83K
82K
86K
81K
84K
85K
88
89

FIG. 4

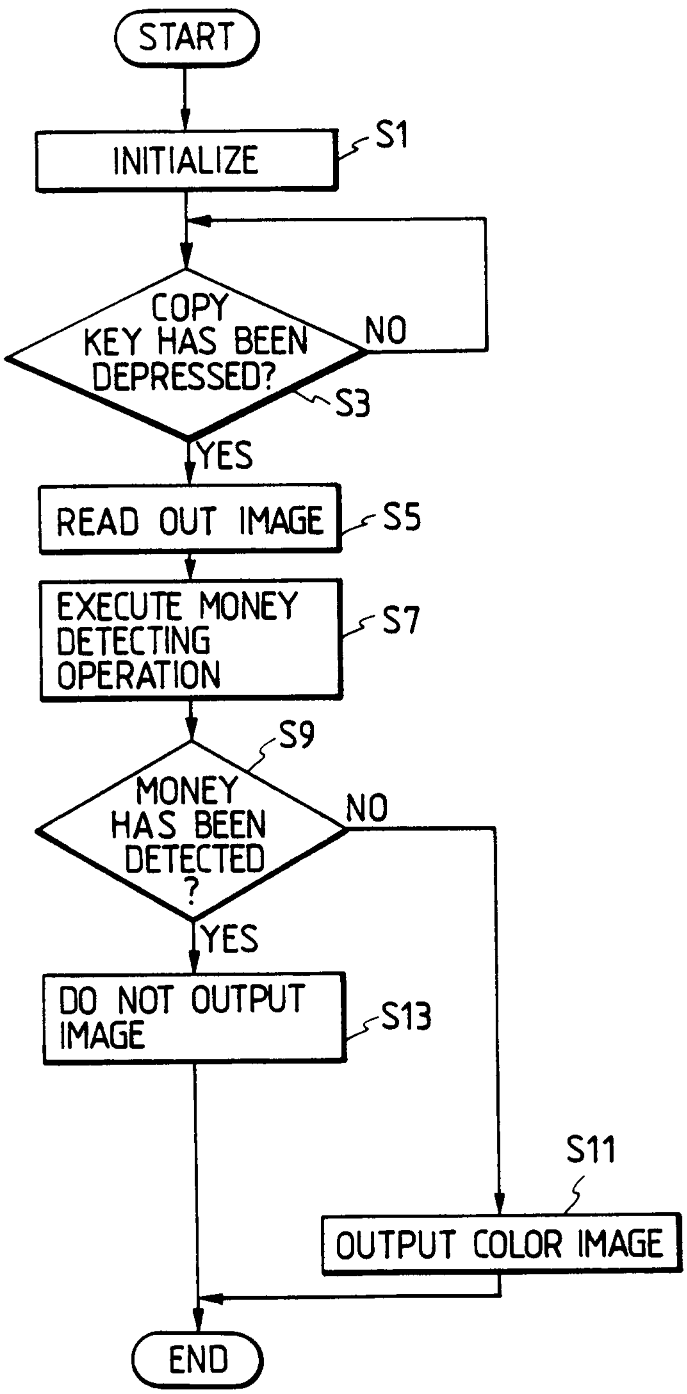
START
INITIALIZE
S1
COPY KEY HAS BEEN DEPRESSED?
NO
S3
YES
READ OUT IMAGE
S5
EXECUTE MONEY DETECTING OPERATION
S7
S9
MONEY HAS BEEN DETECTED ?
NO
YES
DO NOT OUTPUT IMAGE
S13
S11
OUTPUT COLOR IMAGE
END

FIG. 5

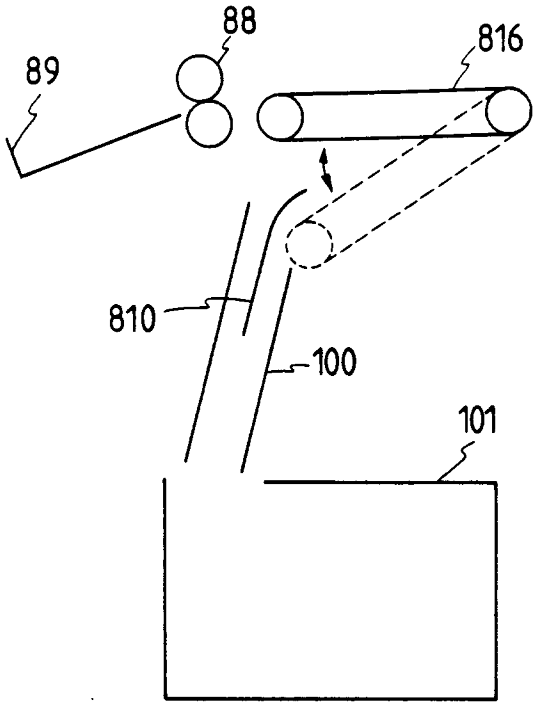
88
89
816
810
100
101

FIG. 11

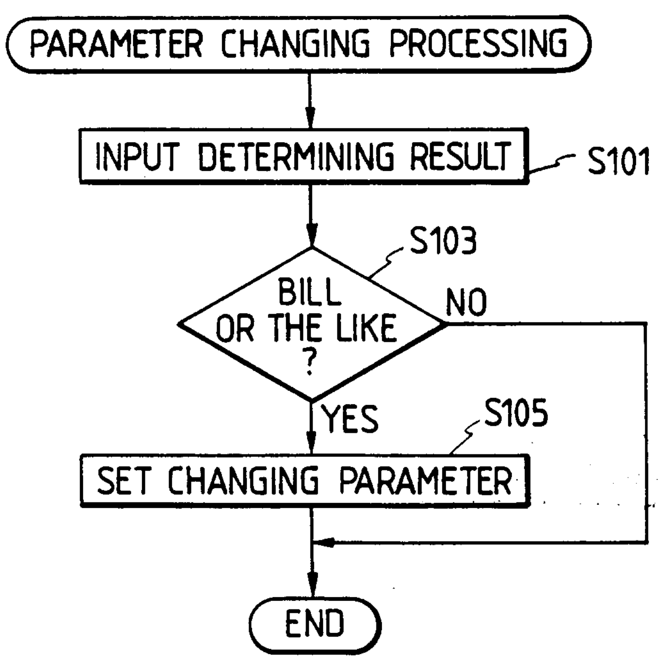
PARAMETER CHANGING PROCESSING
INPUT DETERMINING RESULT
S101
S103
BILL OR THE LIKE ?
NO
YES
S105
SET CHANGING PARAMETER
END

FIG. 6

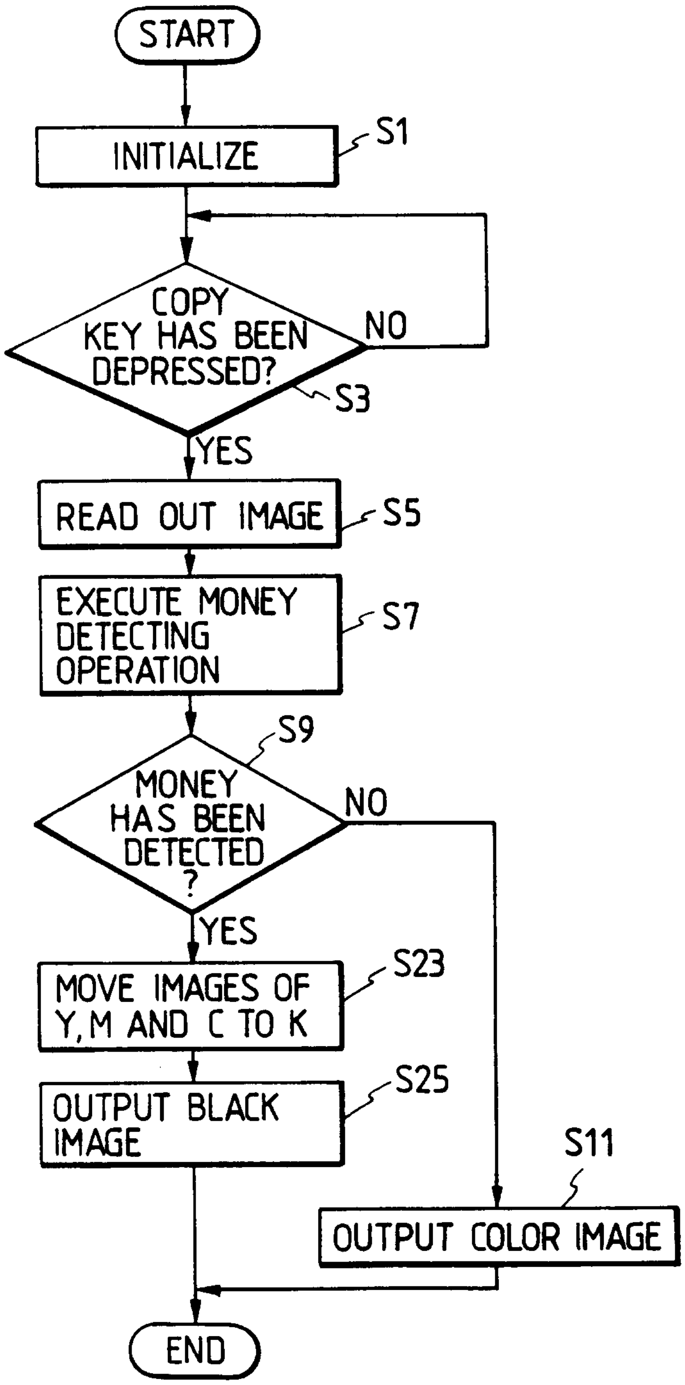
START
INITIALIZE
S1
COPY KEY HAS BEEN DEPRESSED?
NO
S3
YES
READ OUT IMAGE
S5
EXECUTE MONEY DETECTING OPERATION
S7
S9
MONEY HAS BEEN DETECTED ?
NO
YES
MOVE IMAGES OF Y, M AND C TO K
S23
OUTPUT BLACK IMAGE
S25
S11
OUTPUT COLOR IMAGE
END

FIG. 7

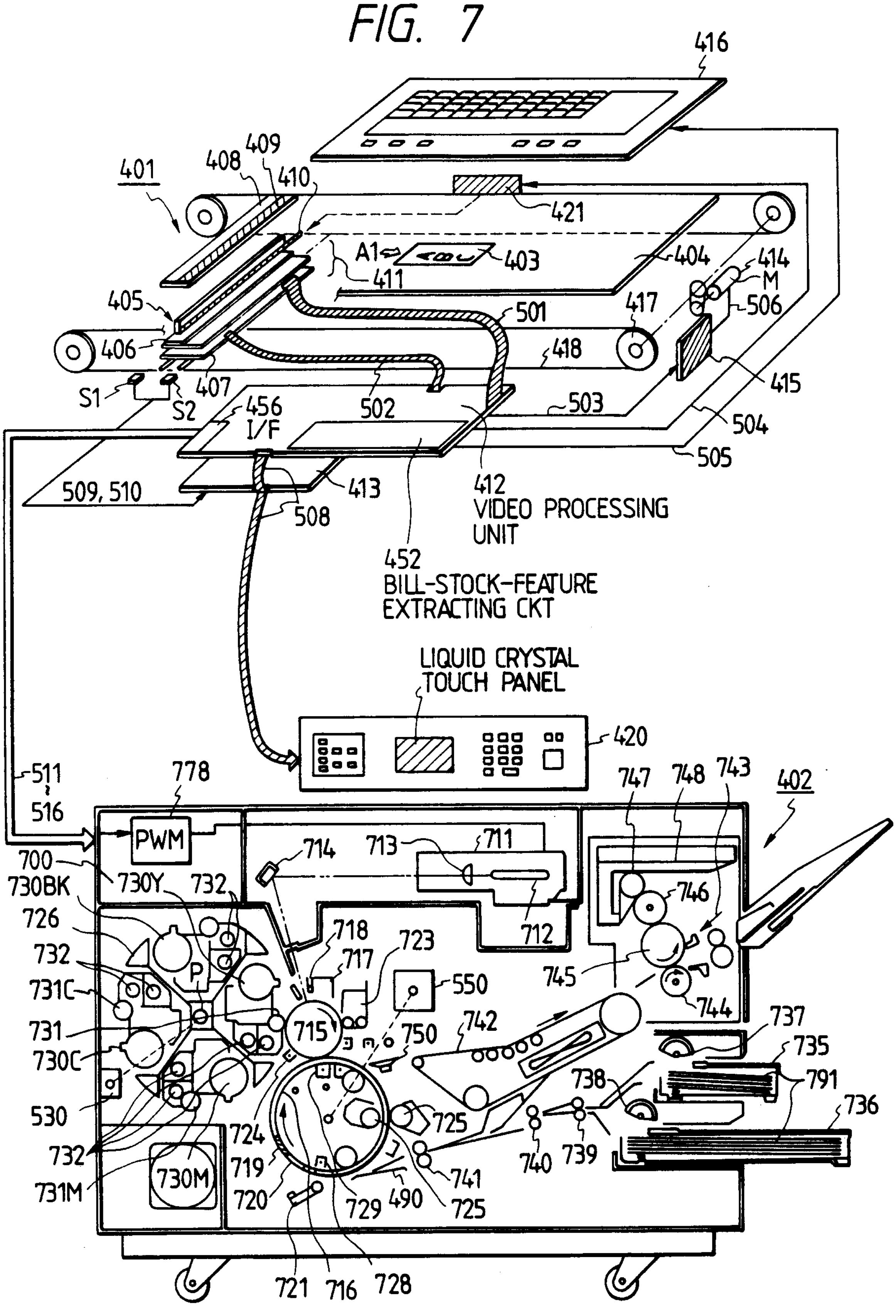
416
401
408
409
410
421
A1
403
404
411
414
M
506
405
501
417
406
418
407
415
S1
S2
456
I/F
502
503
504
505
509, 510
413
508
412
VIDEO PROCESSING
UNIT
452
BILL-STOCK-FEATURE
EXTRACTING CKT
LIQUID CRYSTAL
TOUCH PANEL
420
511
516
778
PWM
747
748
743
402
700
730Y
732
714
713
711
730BK
726
712
746
718
723
717
732
731C
550
745
744
731
715
750
742
737
730C
735
738
791
530
725
736
724
732
740
739
741
719
730M
731M
720
729
490
725
721
716
728

FIG. 8

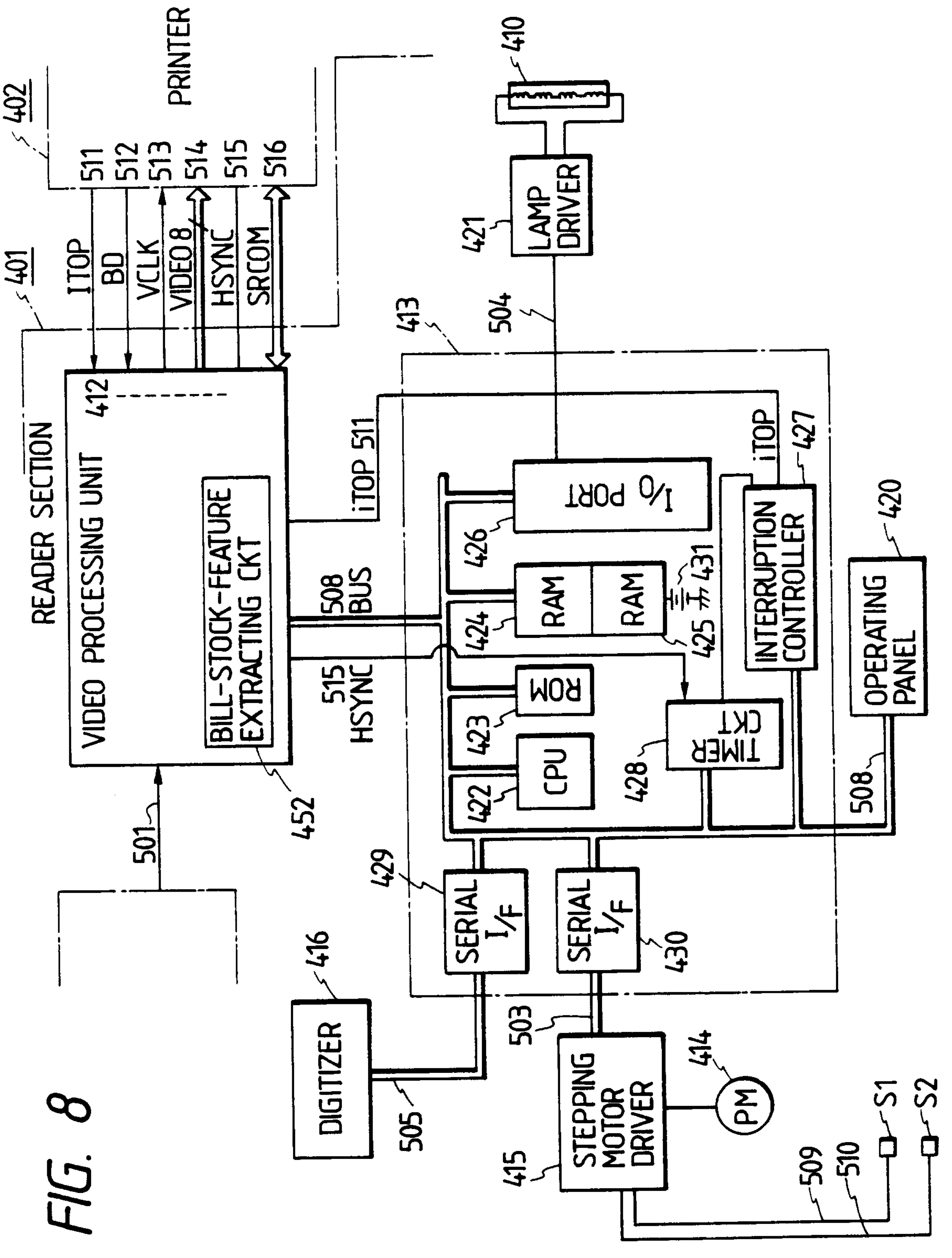
READER SECTION
401
402
PRINTER
ITOP
BD
VCLK
VIDEO 8
HSYNC
SRCOM
511
512
513
514
515
516
VIDEO PROCESSING UNIT
412
BILL-STOCK-FEATURE EXTRACTING CKT
452
501
iTOP 511
508 BUS
515 HSYNC
413
504
410
421
LAMP DRIVER
I/O PORT
426
RAM
RAM
424
425
431
ROM
423
CPU
422
TIMER CKT
428
INTERRUPTION CONTROLLER
iTOP
427
OPERATING PANEL
420
508
SERIAL I/F
429
SERIAL I/F
430
DIGITIZER
416
505
503
STEPPING MOTOR DRIVER
415
PM
414
509
510
S1
S2

FIG. 9A

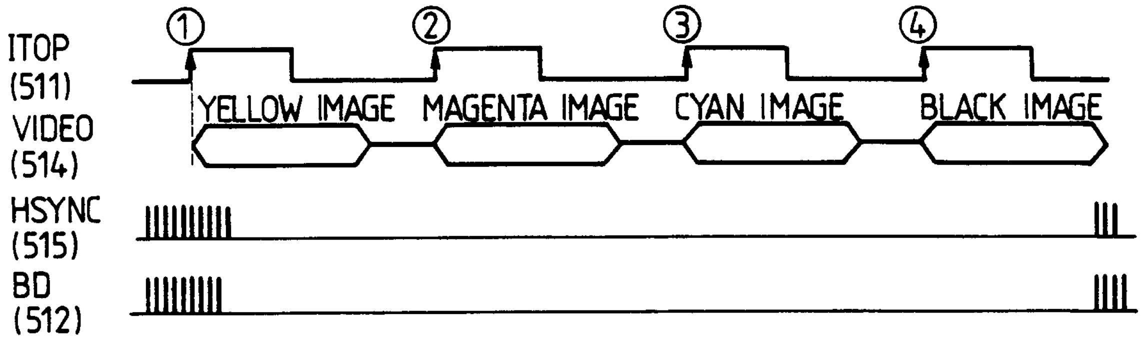


FIG. 9B

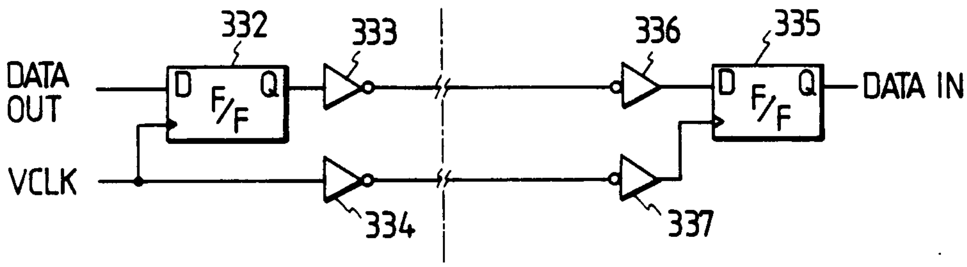


FIG. 9C

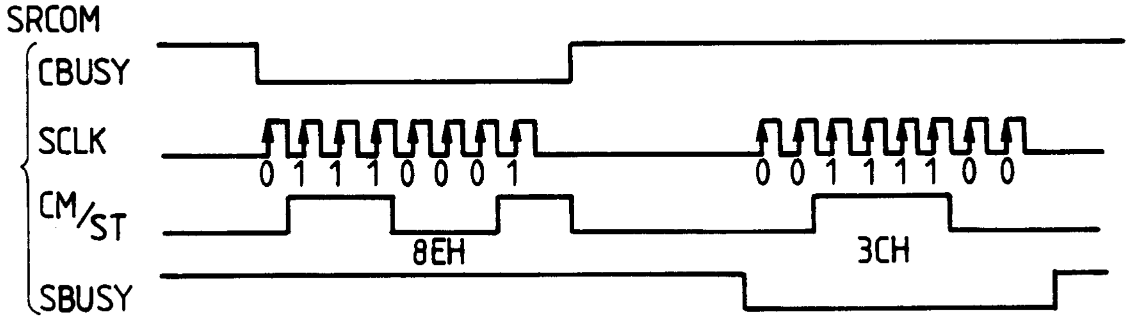

FIG. 10

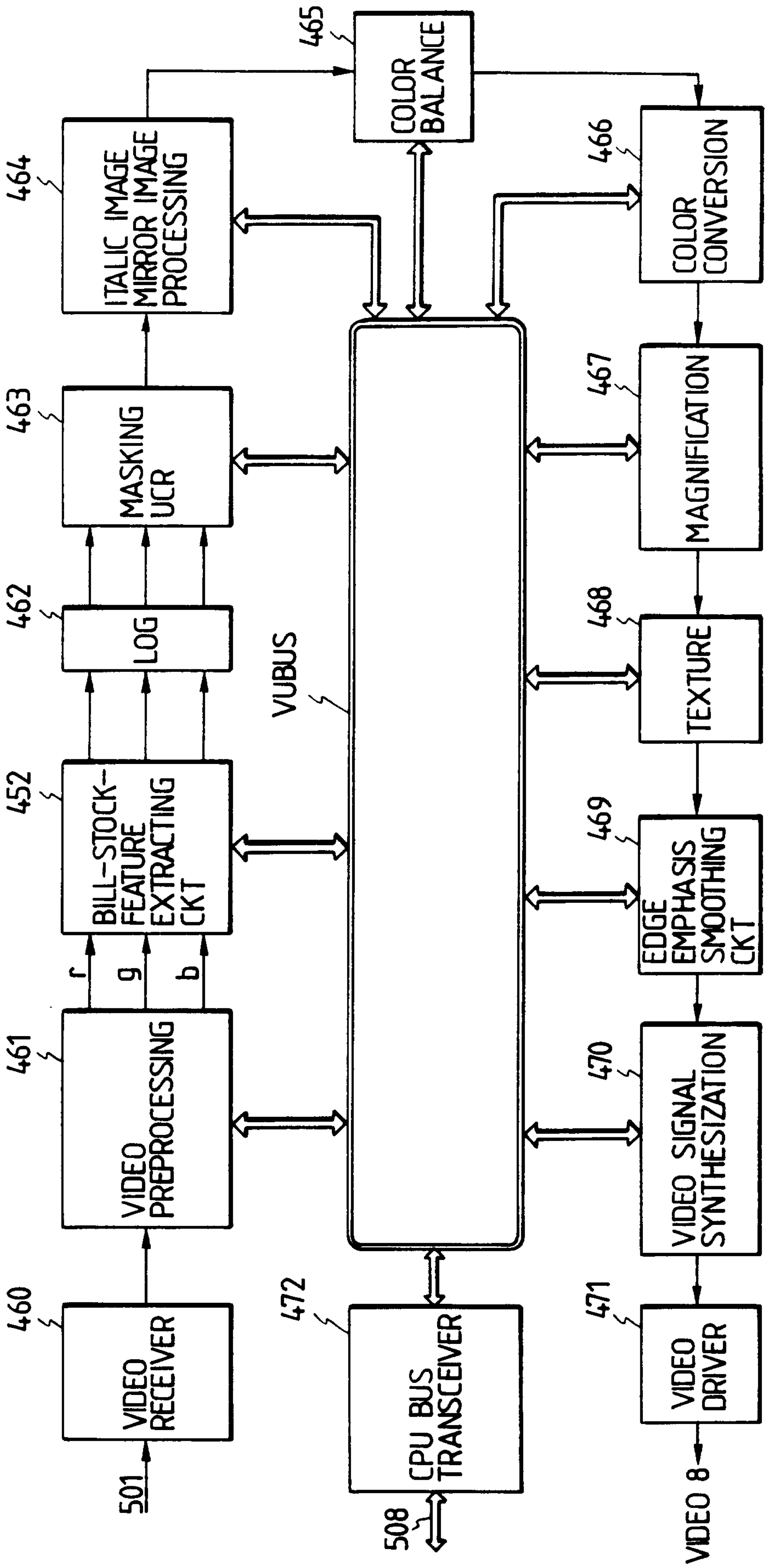
VIDEO RECEIVER
460
501
VIDEO PREPROCESSING
461
r
g
b
BILL-STOCK-FEATURE EXTRACTING CKT
452
LOG
462
MASKING UCR
463
ITALIC IMAGE MIRROR IMAGE PROCESSING
464
COLOR BALANCE
465
COLOR CONVERSION
466
MAGNIFICATION
467
TEXTURE
468
EDGE EMPHASIS SMOOTHING CKT
469
VIDEO SIGNAL SYNTHESIZATION
470
VIDEO DRIVER
471
VIDEO 8
CPU BUS TRANSCEIVER
472
508
VUBUS

FIG. 12

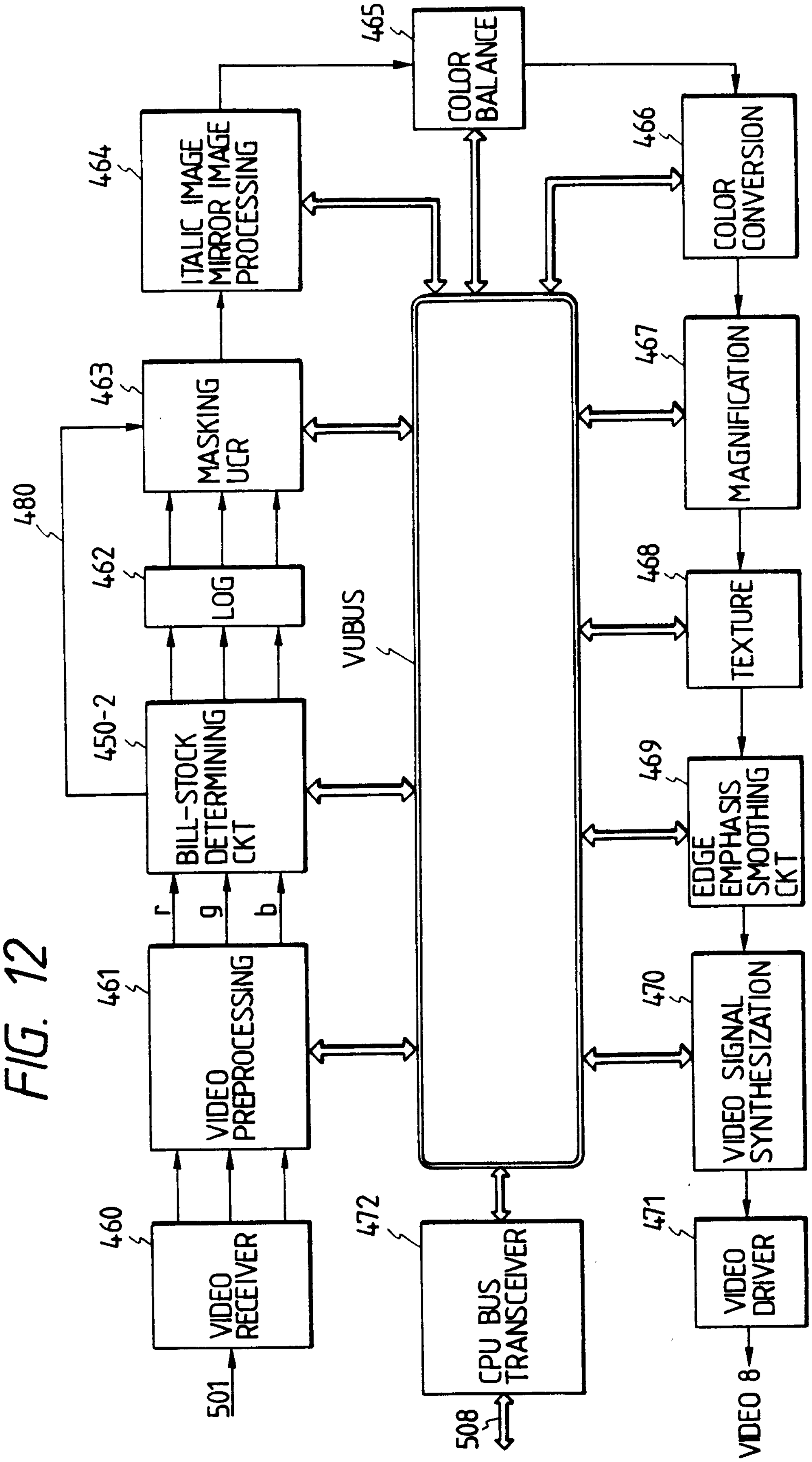
501
VIDEO RECEIVER
460
VIDEO PREPROCESSING
461
r
g
b
BILL-STOCK DETERMINING CKT
450-2
480
LOG
462
MASKING UCR
463
ITALIC IMAGE MIRROR IMAGE PROCESSING
464
COLOR BALANCE
465
VUBUS
CPU BUS TRANSCEIVER
472
508
COLOR CONVERSION
466
MAGNIFICATION
467
TEXTURE
468
EDGE EMPHASIS SMOOTHING CKT
469
VIDEO SIGNAL SYNTHESIZATION
470
VIDEO DRIVER
471
VIDEO 8

FIG. 13

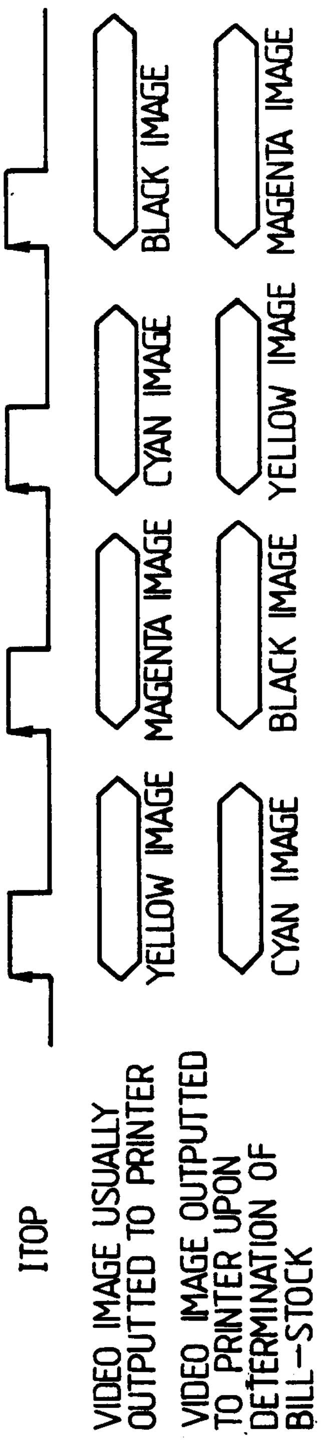
ITOP
(a) VIDEO IMAGE USUALLY OUTPUTTED TO PRINTER
YELLOW IMAGE
MAGENTA IMAGE
CYAN IMAGE
BLACK IMAGE
(b) VIDEO IMAGE OUTPUTTED TO PRINTER UPON DETERMINATION OF BILL-STOCK
CYAN IMAGE
BLACK IMAGE
YELLOW IMAGE
MAGENTA IMAGE

FIG. 14

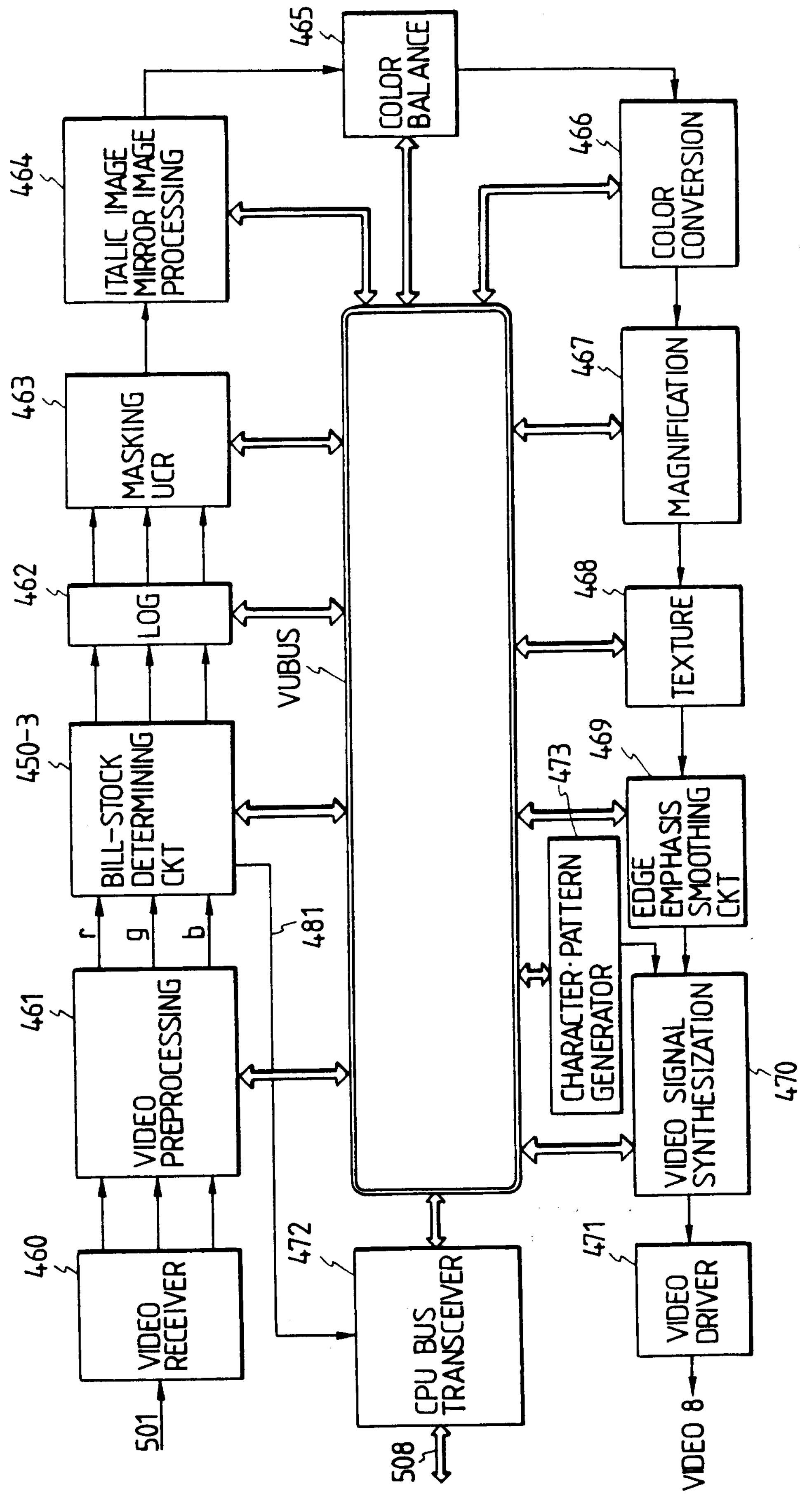

501
VIDEO RECEIVER
460
VIDEO PREPROCESSING
461
r
g
b
BILL-STOCK DETERMINING CKT
450-3
LOG
462
MASKING UCR
463
ITALIC IMAGE MIRROR IMAGE PROCESSING
464
COLOR BALANCE
465
COLOR CONVERSION
466
MAGNIFICATION
467
TEXTURE
468
EDGE EMPHASIS SMOOTHING CKT
469
CHARACTER·PATTERN GENERATOR
473
VIDEO SIGNAL SYNTHESIZATION
470
VIDEO DRIVER
471
VIDEO 8
VUBUS
481
CPU BUS TRANSCEIVER
472
508

FIG. 15

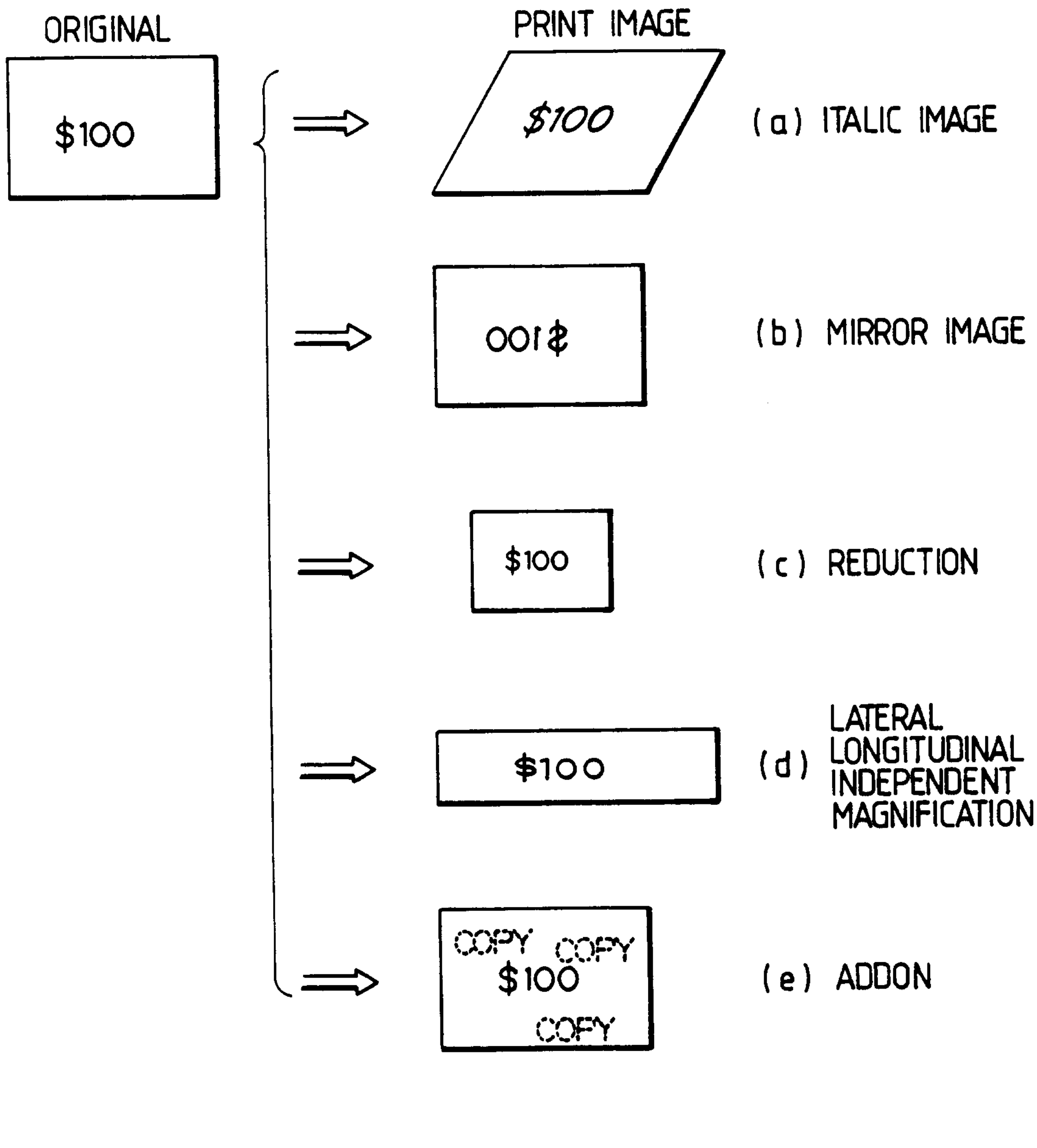
ORIGINAL
PRINT IMAGE
$100
$100
(a) ITALIC IMAGE
001$
(b) MIRROR IMAGE
$100
(c) REDUCTION
$100
(d) LATERAL LONGITUDINAL INDEPENDENT MAGNIFICATION
COPY COPY
$100
COPY
(e) ADDON

FIG. 16

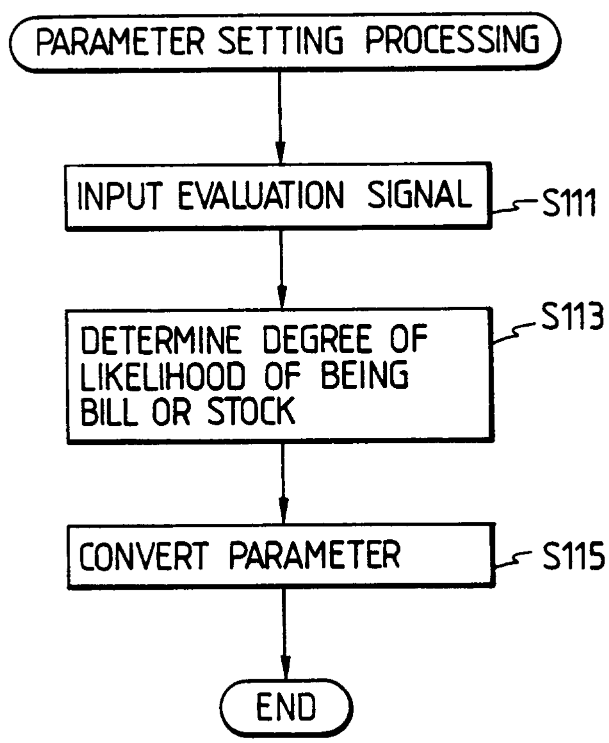
PARAMETER SETTING PROCESSING
INPUT EVALUATION SIGNAL
S111
DETERMINE DEGREE OF LIKELIHOOD OF BEING BILL OR STOCK
S113
CONVERT PARAMETER
S115
END

FIG. 17

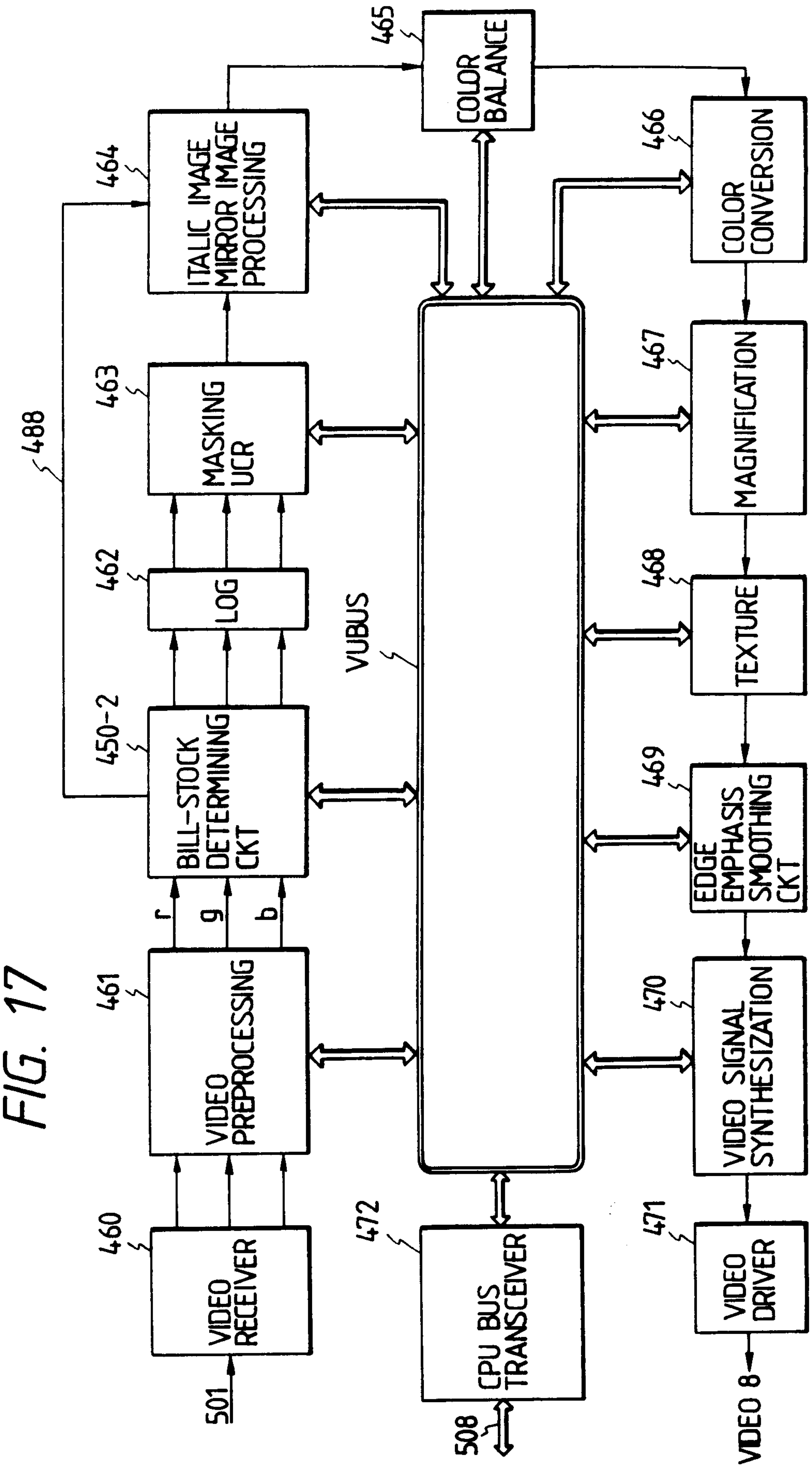
501
460
VIDEO RECEIVER
461
VIDEO PREPROCESSING
r
g
b
450-2
BILL-STOCK DETERMINING CKT
462
LOG
463
MASKING UCR
464
ITALIC IMAGE MIRROR IMAGE PROCESSING
488
465
COLOR BALANCE
VUBUS
472
CPU BUS TRANSCEIVER
508
466
COLOR CONVERSION
467
MAGNIFICATION
468
TEXTURE
469
EDGE EMPHASIS SMOOTHING CKT
470
VIDEO SIGNAL SYNTHESIZATION
471
VIDEO DRIVER
VIDEO 8

FIG. 18

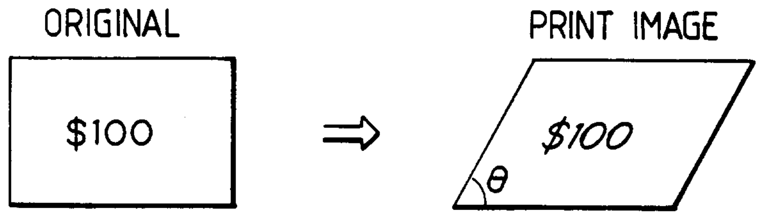
ORIGINAL
$100
PRINT IMAGE
$100
θ

FIG. 20

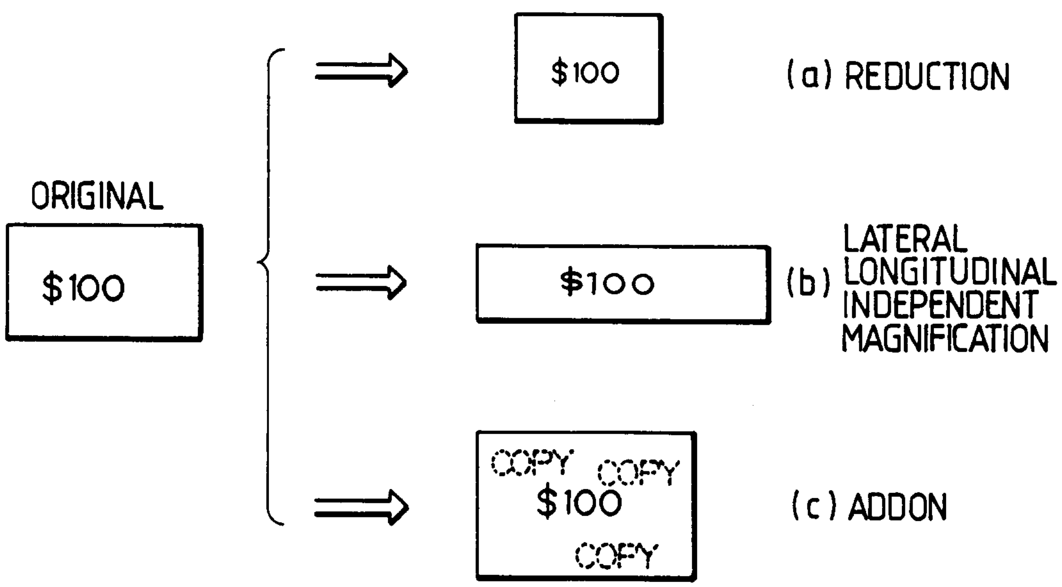
ORIGINAL
$100
$100
(a) REDUCTION
$100
(b) LATERAL LONGITUDINAL INDEPENDENT MAGNIFICATION
COPY
COPY
$100
COPY
(c) ADDON

FIG. 19

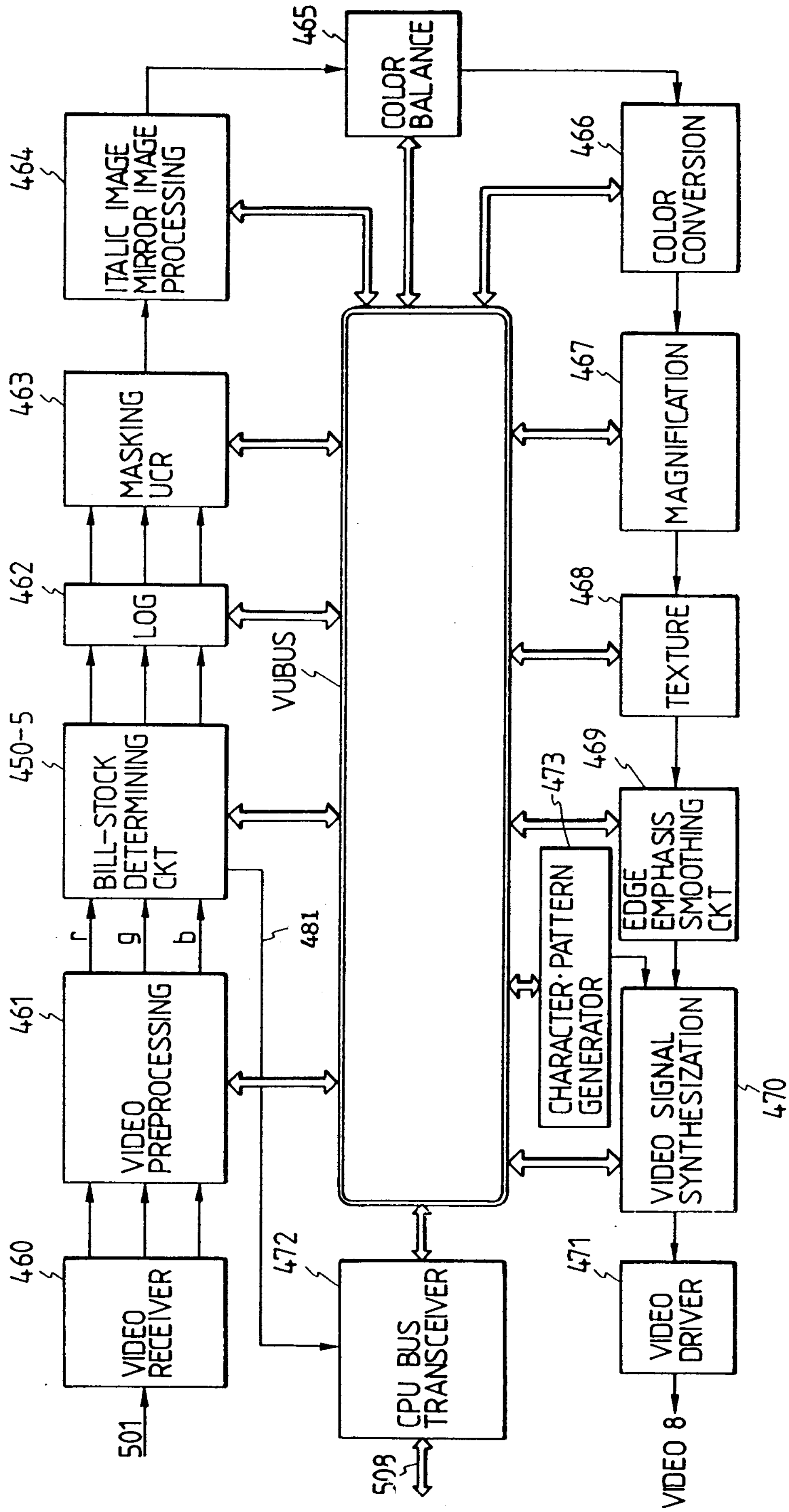
501
VIDEO RECEIVER
460
VIDEO PREPROCESSING
461
r
g
b
BILL-STOCK DETERMINING CKT
450-5
LOG
462
MASKING UCR
463
ITALIC IMAGE MIRROR IMAGE PROCESSING
464
COLOR BALANCE
465
COLOR CONVERSION
466
MAGNIFICATION
467
TEXTURE
468
EDGE EMPHASIS SMOOTHING CKT
469
CHARACTER·PATTERN GENERATOR
473
VIDEO SIGNAL SYNTHESIZATION
470
VIDEO DRIVER
471
VIDEO 8
VUBUS
481
CPU BUS TRANSCEIVER
472
508

FIG. 21

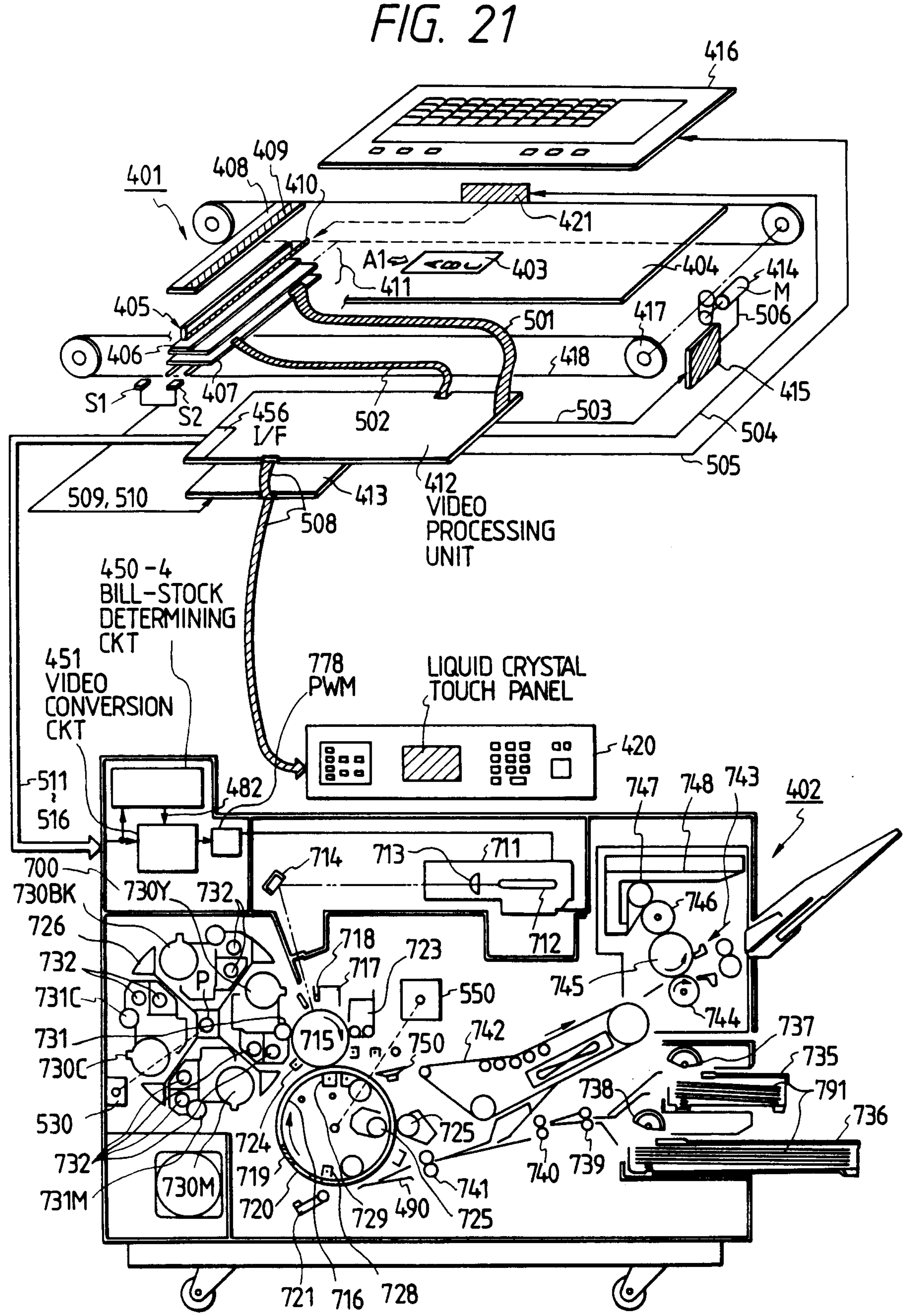
416
401
408
409
410
421
A1
403
404
414
M
411
405
501
417
506
406
418
S1
407
S2
456
I/F
502
503
415
504
509, 510
413
412
VIDEO
PROCESSING
UNIT
505
508
450-4
BILL-STOCK
DETERMINING
CKT
451
VIDEO
CONVERSION
CKT
778
PWM
LIQUID CRYSTAL
TOUCH PANEL
420
511
516
482
747
748
743
402
700
730BK
730Y
732
714
713
711
712
726
718
723
746
732
731C
717
550
745
731
715
750
742
744
737
730C
735
738
791
530
725
736
732
724
740
739
731M
730M
719
720
741
729
490
725
721
716
728

FIG. 22

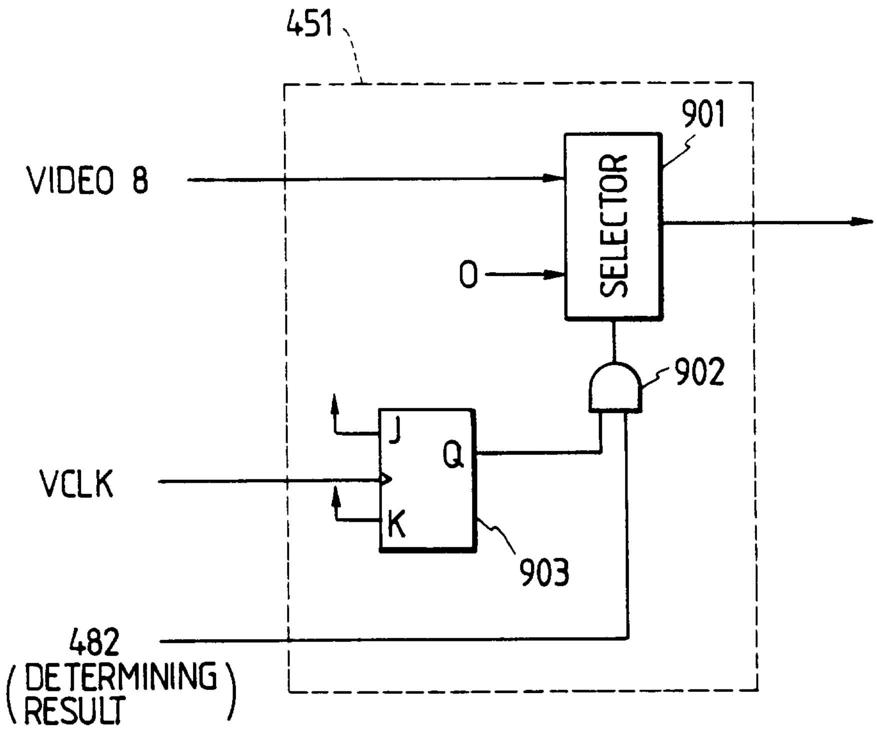
451
901
VIDEO 8
SELECTOR
0
902
J
Q
VCLK
K
903
482
(DETERMINING RESULT)

FIG. 23

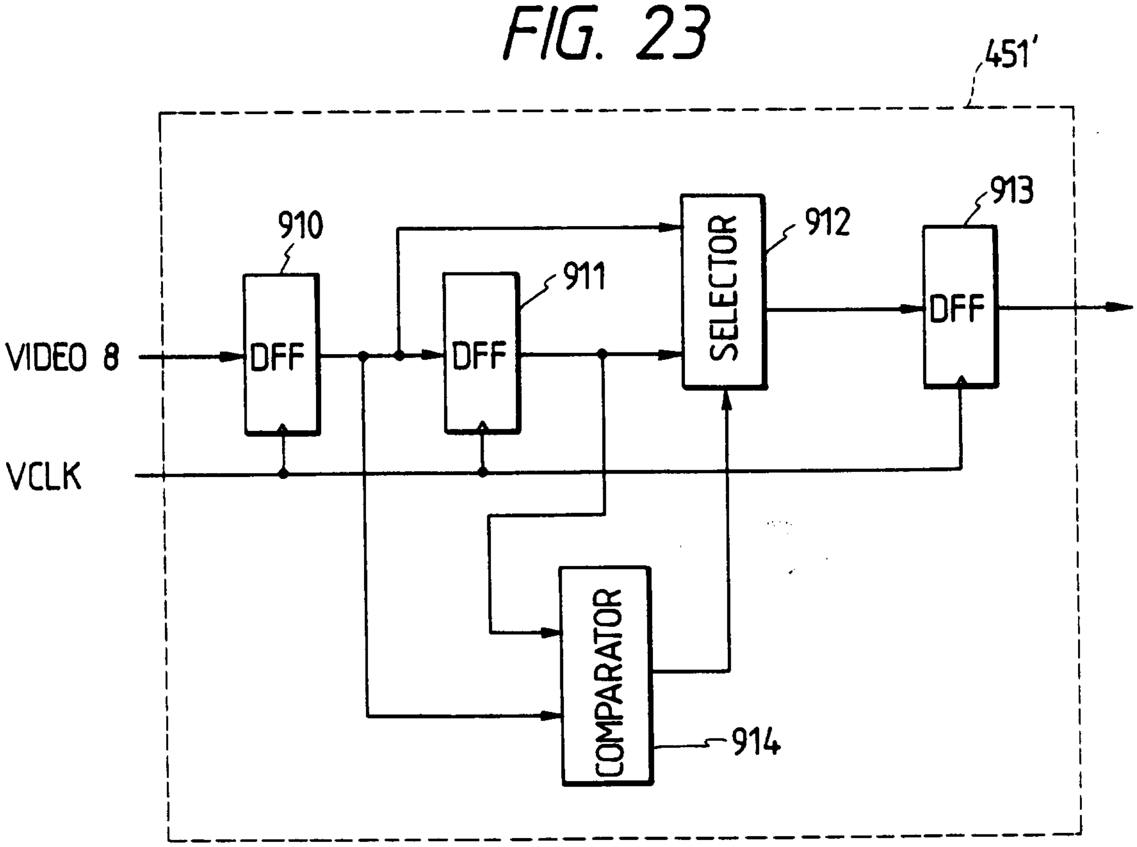
451'
910
911
912
913
VIDEO 8
DFF
DFF
SELECTOR
DFF
VCLK
COMPARATOR
914

FIG. 24

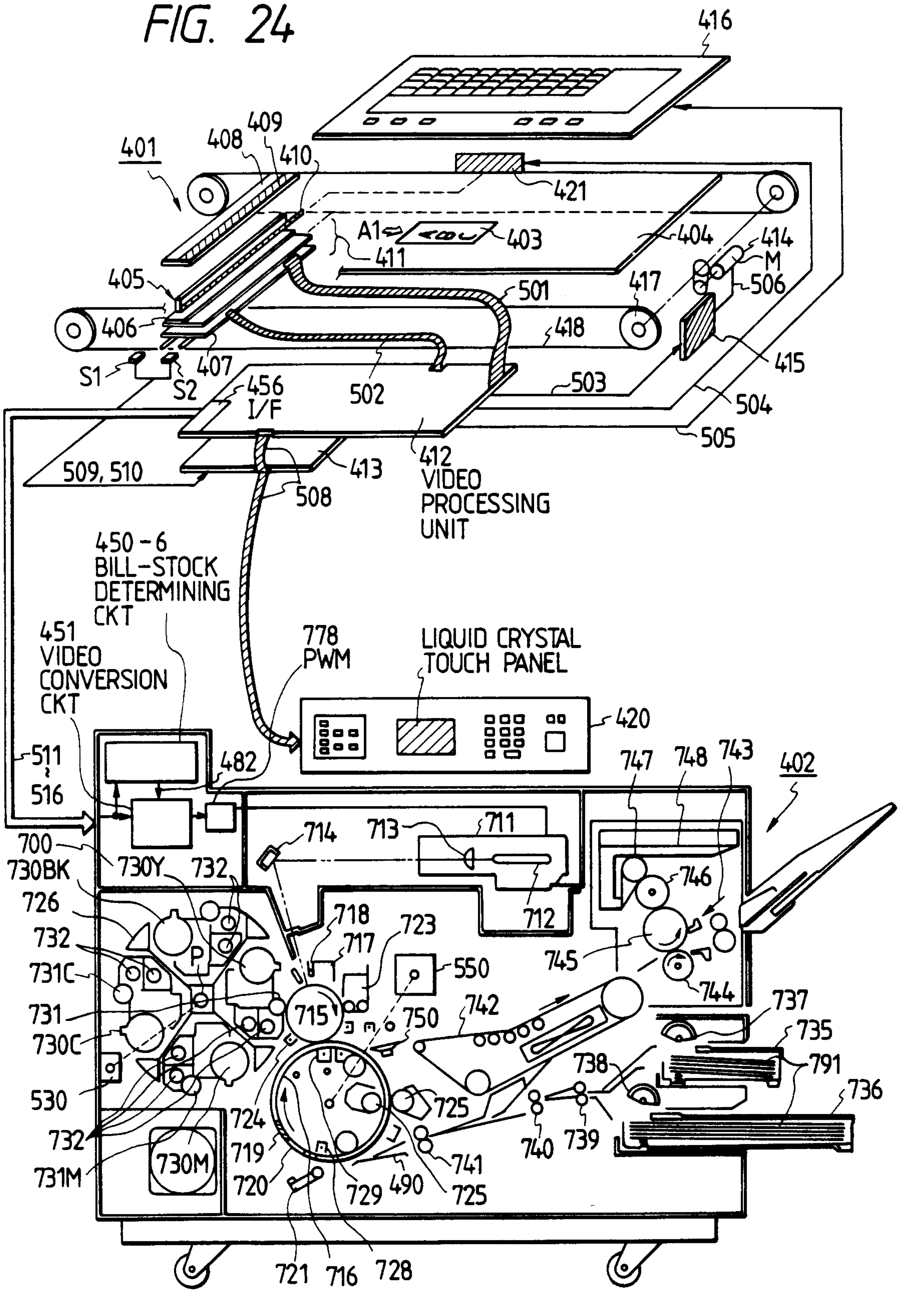
416
401
408
409
410
421
A1
403
404
411
414
M
506
405
501
417
406
418
407
415
S1
S2
456
I/F
502
503
504
505
509, 510
413
412
VIDEO
PROCESSING
UNIT
508
450-6
BILL-STOCK
DETERMINING
CKT
451
VIDEO
CONVERSION
CKT
778
PWM
LIQUID CRYSTAL
TOUCH PANEL
420
511
516
482
747
748
743
402
700
730BK
730Y
732
714
713
711
712
726
718
717
723
746
P
550
745
731C
744
731
715
742
750
737
730C
735
738
791
530
724
725
736
740
739
719
741
731M
730M
720
729
490
721
716
728

FIG. 25

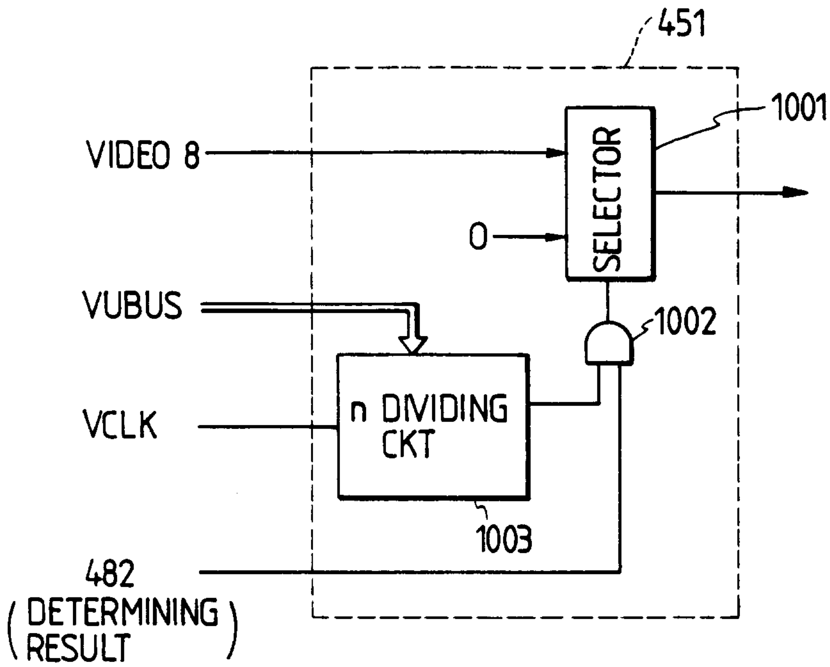
451
1001
VIDEO 8
SELECTOR
0
VUBUS
1002
n DIVIDING CKT
VCLK
1003
482
(DETERMINING RESULT)

FIG. 28

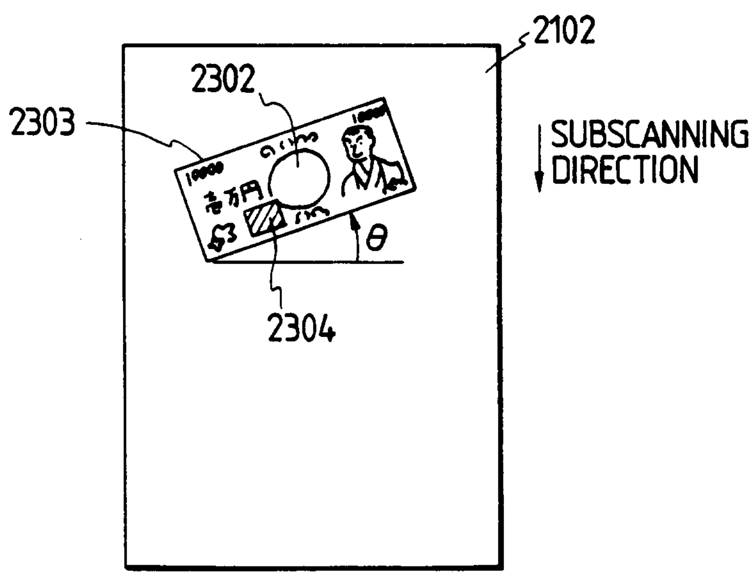
2102
2302
2303
SUBSCANNING DIRECTION
θ
2304

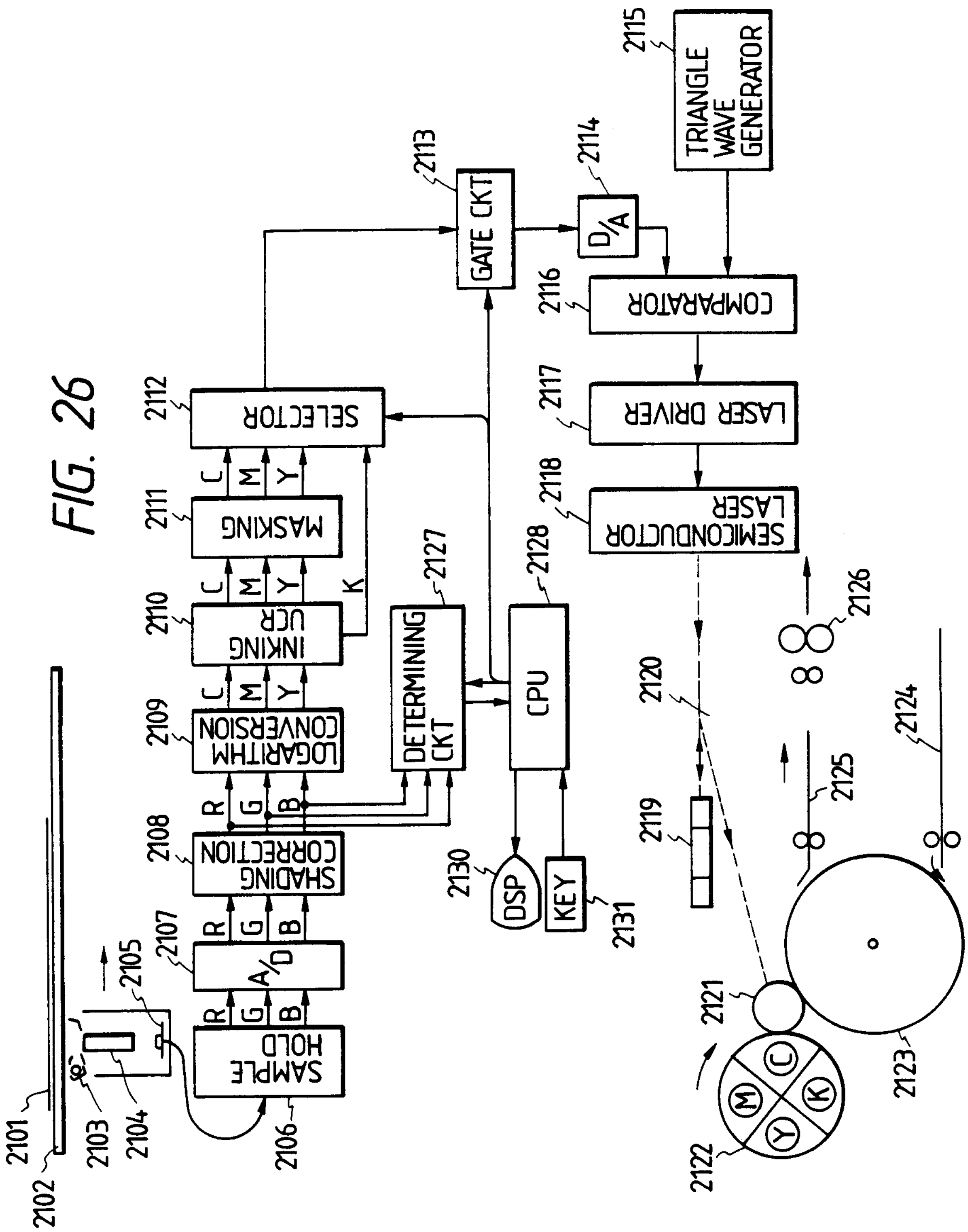
2101
2102
2103
2104
2105
2106
SAMPLE HOLD
R
G
B
2107
A/D
2108
SHADING CORRECTION
2109
LOGARITHM CONVERSION
C
M
Y
K
2110
INKING UCR
2111
MASKING
2112
SELECTOR
2113
GATE CKT
2114
D/A
2115
TRIANGLE WAVE GENERATOR
2116
COMPARATOR
2117
LASER DRIVER
2118
SEMICONDUCTOR LASER
2119
2120
2121
2122
2123
2124
2125
2126
2127
DETERMINING CKT
2128
CPU
2130
DSP
2131
KEY

FIG. 26

FIG. 27

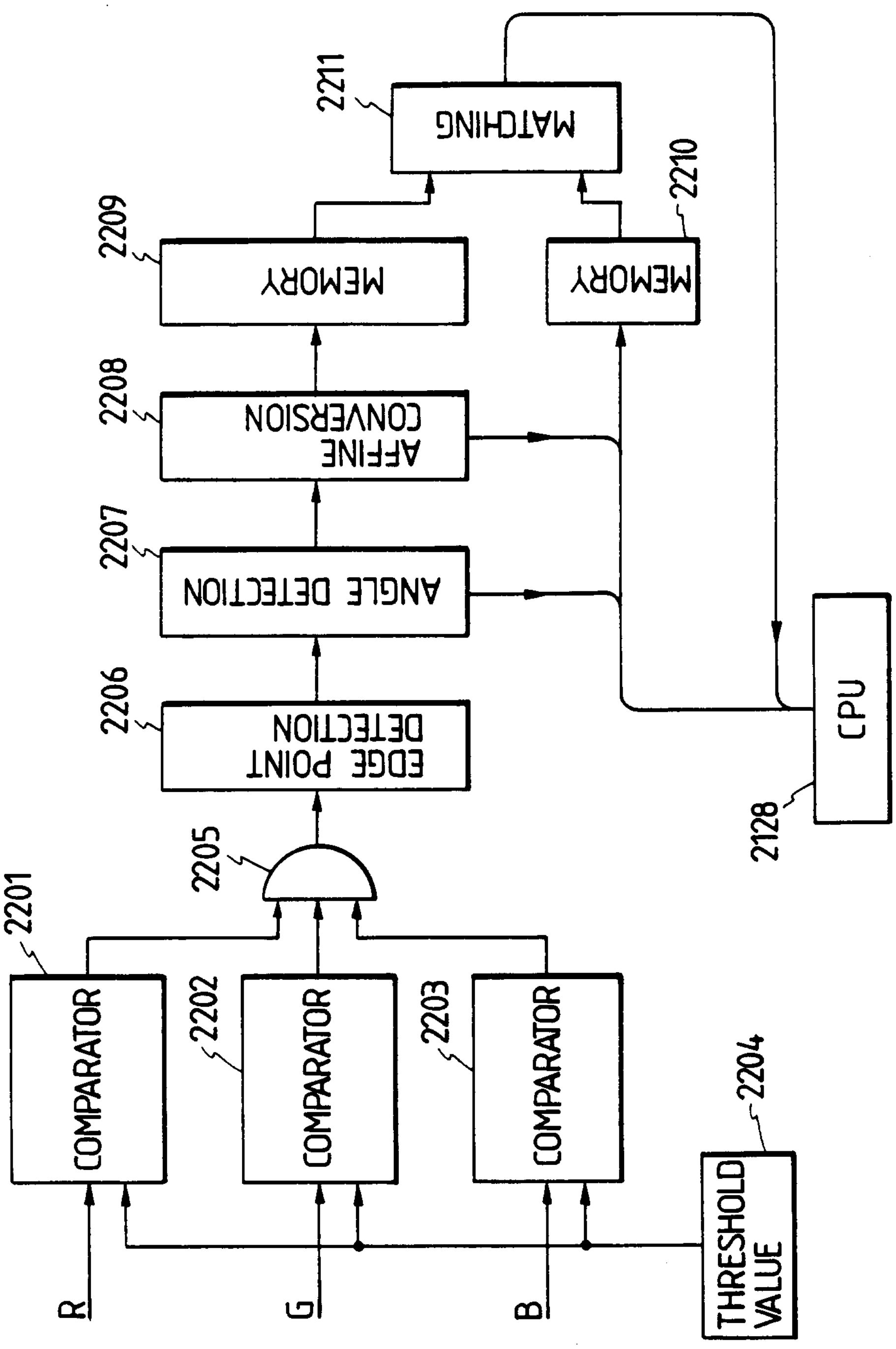
R
G
B
COMPARATOR
COMPARATOR
COMPARATOR
2201
2202
2203
THRESHOLD VALUE
2204
2205
EDGE POINT DETECTION
2206
ANGLE DETECTION
2207
AFFINE CONVERSION
2208
MEMORY
2209
MEMORY
2210
MATCHING
2211
CPU
2128